# EUROPÄISCHE PATENTSCHRIFT

(11) **EP 0 656 739 B1**
(45) Veröffentlichungstag und Bekanntmachung des Hinweises auf die Patenterteilung: **07.03.2001**
(21) Anmeldenummer: 94118948.2
(22) Anmeldetag: 01.12.1994
(51) Int. Cl.: H05B 3/26, H05B 1/02

(54) **Beheizung mit einer Heizeinheit**
Heating with a heating unit
Chauffage avec une unité de chauffage

(30) Priorität: 02.12.1993 DE 4341035; 02.12.1993 DE 4341036
(43) Veröffentlichungstag der Anmeldung: 07.06.1995
(73) Patentinhaber: E.G.O. Elektro-Gerätebau GmbH, 75038 Oberderdingen (DE)
(72) Erfinder: Lorenz, Josef, D-75015 Bretten (DE); Kössler, Robert, Erbin: Kössler Brigitte, D-75015 Bretten (DE); De Marco, Jürgen, D-75038 Oberderdingen (DE)
(74) Vertreter: Patentanwälte Ruff, Beier und Partner

(56) Entgegenhaltungen:
- EP-A- 0 360 418
- EP-A- 0 481 162
- EP-A- 0 495 770
- WO-A-91/10336
- DE-A- 1 806 723
- FR-A- 1 569 036
- FR-A- 2 223 927
- GB-A- 1 019 721
- US-A- 3 109 228
- US-A- 3 694 627
- US-A- 3 763 004
- US-A- 4 063 068

## Beschreibung

Die Erfindung betrifft eine Beheizung nach dem Oberbegriff des Patentanspruchs 1. Sie soll insbesondere in Modul-Bauweise zur Verwendung an unterschiedlichsten Geräten geeignet sein. Die Beheizung kann gemäß der WO-A-9 110 336 oder der DE-A-1 806 723 z.B. als räumlich verhältnismäßig kleine, jedoch leistungsstarke Heizeinheit zur Beheizung eines Mediums, wie einese Fluids, im stehenden und/oder durchlaufenden Zustand verwendet werden. Die Beheizung bildet dann für den Wärmeübergang zum Medium eine thermische Abgabefläche, welche durch einen vermittelnden Wärmeleitkörper oder unmittelbar durch die Beheizung gebildet sein kann. Die Beheizung kann zur Erhitzung und/oder Verdampfung einer Flüssigkeit, wie Wasser, verwendet werden und daher z.B. zum Einbau in einen Eierkocher, eine Spülmaschine, ein Wasserbad, ein Warmhalte- bzw. Wasserbecken, einen Durchlauferhitzer, einen Ölkocher, eine Friteuse oder dgl. geeignet sein. Sie kann aber auch zur Erhitzung eines gasförmigen Mediums, wie Luft, verwendet werden und dann z.B. zum Einbau in die Strömungswege eines Gebläses geeignet sein. Ferner kann sie gemäß der US-A-4 063 068 zur Erwärmung eines Feststoffgegegenstandes, wie Speisegefäßen, vorgesehen und dann für den Einbau in eine Warmhalteplatte oder dgl. geeignet sein.

Ferner kann gemäß der EP-A-0 495 770 ein und dieselbe Heizeinheit von z.B. einer gegebenen Nennleistung in beliebiger Anzahl so anzuordnen sein, daß sich für das jeweilige Gerät die gewünschte Gesamt-Nennleistung ergibt, ohne daß hierfür eine Veränderung der jeweils als Baumodul vorgesehenen Heizeinheit erforderlich ist. Die Beheizung soll auch für das Temperieren von Räumen, wie Gebäude- oder Fahrzeugräumen über eine beheizte Luftströmung oder gemäß der US-A-3 109 228 oder der FR-A-2 223 927 durch Heizstrahlung geeignet sein. Ferner soll sie zur Beheizung von solchen Wärme-Abgabeflächen geeignet sein, welche die Wärmeenergie durch Wärmeleitung gemäß der FR-A-1 569 036 unmittelbar an das zu erwärmende fließfähige Medium oder gemäß der EP-A-0 481 162 an einen abhebbar mit der Abgabefläche verbundenen Gegenstand, wie die Bodenwand eines abgestellten Speisengefäßes abgeben; dies ist z.B. bei Warmhalteplatten der Fall, deren Abgabefläche eine Stellfläche für den Gegenstand bildet und die aus einem metallischen oder nichtmetallischen Werkstoff, z.B. rostfreiem Stahl, Glaskeramik oder dgl. bestehen kann. Des weiteren soll die Beheizung auch zur Erwärmung von Flüssigkeiten, insbesondere Wasser, geeignet sein, wenn z.B. die Wärme-Abgabefläche aus rostfreiem Stahl oder einem der genannten Werkstoffe besteht.

Die Beheizung soll zweckmäßig eine Nennleistung von 10 bis 500 Watt oder mehr als 50 bis 1000 Watt aufweisen. Je nach den spezifischen Erfordernissen ist zwischen diesen Grenzwerten oder darüberhinaus jeder um 5 bis 10 Watt erhöhte Zwischenwert denkbar. Besonders vorteilhaft ist eine Nennleistung der Heizeinheit von 150, 200, 250, 350, 500 bzw. 1000 Watt. Dann ist eine besonders günstige Leistungsabstufung für die zu beheizenden Geräte möglich bzw. haben zu beheizende Wärmegeräte meist eine Gesamt-Nennleistung, die das einfache oder ein ganzzahliges Vielfaches von 500 Watt oder dgl. beträgt. Der jeweilige Wert kann einen Mindest-oder einen Höchstwert darstellen.

Andererseits soll die Beheizung bzw. Heizeinheit eine möglichst kleine Flächen- bzw. Dickenausdehnung haben. Statt einer eckigen Außenform gemäß der US-A-3 694 627 sind auch andere, insbesondere zentrisch- bzw. spiegelsymmetrische Außenformen denkbar. Die kleinste Weite bzw. Kantenlänge der Außenform kann in der Größenordnung von 9 mm und die größte in der Größenordnung von 150 mm liegen. Bevorzugt sind zwischen mindestens etwa 25 mm und höchstens 60 mm vorgesehen. Die auf die Flächenausdehnung der Heizeinheit bezogene Leistungsdichte kann zwischen mindestens etwa 3 und höchstens 40 Watt/cm², insbesondere bei Umströmung der Basis, der Widerstände bzw. des Wärmeleiters mit einer kühlenden Flüssigkeit bis höchstens 400 oder 500 Watt/cm² liegen. Je nach den Erfordernissen ist dazwischen jeder weitere, um 1 oder 10 Watt veränderte Wert denkbar. Die Flüssigkeit kann wässrig oder ölig sein. Die maximale, gegebenenfalls gemäß der US-A-3 763 004 durch geeignete Sicherungsmittel zwangsläufig begrenzte, Betriebstemperatur soll höchstens 250° bis 300° C betragen bzw. 200° bis 250° C nicht überschreiten. Die Sicherungsmittel sind zweckmäßig so angeordnet bzw. wärmeleitend mit der Heizeinheit verbunden, daß sie die Leistungszufuhr bereits dann teilweise oder vollständig abschalten, wenn sie selbst eine gegenüber der genannten Betriebstemperatur geringere Temperatur von z.B. 140° bis 150° C erreicht haben.

Die Beheizung oder Heizeinheit umfaßt vorteilhaft gemäß der GB-A-1 019 721 eine einschichtige bzw. über ihre Dicke und/oder innerhalb ihrer Außenkanten einteilige bzw. demgegenüber anders ausgebildete Basis. Sie kann plattenförmig sein bzw. bis auf Bereiche eventueller Durchbrüche voneiannder abgekehrte parallele größte Außenflächen aufweisen. Diese können über den größten Teil der oder über die gesamte Flächenausdehnung durchgehend eben sein.

An einer oder beiden Flächen ist ein Heizwiderstand oder sind mehrere Heizwiderstände so angeordnet, daß sie z.B. durch unmittelbare wärmeleitende Verbindung oder dgl. die Basis direkt aufheizen und dadurch beheizte Basiszonen bilden. Demgegenüber flächengrößere und innerhalb der zugehörigen Flächenausdehnung liegende Bereiche der Basis sind nicht oder thermisch wesentlich weniger direkt vom Heizwiderstand beheizt, z.B. nur durch die wärmeleitende Ankoppelung an die Basiszone. Solche Basisbereiche können auch in der beschriebenen Weise mit mindestens einem Heizwiderstand versehen sein. Sie bilden unter Betriebsbedingungen dann einen unbeheizten Basisbereich, wenn dieser Heizwiderstand nicht oder nur mit einer Leistung betrieben wird, welche wesentlich geringer als die Betriebsleistung des der beheizten Basiszone zugehörigen Heizwiderstandes ist. Dann ergeben sich ähnliche thermische Gefälle, wie wenn im unbeheizten Basisbereich kein Heizwiderstand vorgesehen wäre.

Die Flächenausdehnung der unbeheizten Basisbereiche kann gegenüber derjenigen der beheizten Basisbereiche mindestens 3-bis 4-fach oder höchstens 10- bis 12-fach größer sein. Zwischen diesen Grenzwerten ist je nach den Erfordernissen jeder um die Zahl 1 erhöhte Faktor denkbar. Die genannte Außenweite der Basis kann gleich der größten linearen Ausdehnung des unbeheizten Basisbereiches oder gegenüber dieser bzw. der rechtwinklig dazu liegenden kleinsten linearen Ausdehnung um mindestens das 1,5- bis höchstens das 8-fache größer sein. Je nach den Erfordernissen ist zwischen diesen Grenzwerten jeder weitere, etwa um 0,5 abgestufte Faktor denkbar.

Es ergibt sich in den beheizten bzw. thermisch unmittelbar an den Heizwiderstand flächig angekoppelten Basiszonen eine verhältnismäßig hohe Leistungsdichte von mindestens 10 bis höchstens 250, 350, 400 oder 500 Watt/cm². Zwischen diesen Grenzwerten ist je nach den Erfordernissen jede weitere Abstufung um etwa 5 bis 10 Watt/cm² denkbar. Das hohe Gefälle der Leistungsdichte zwischen den beheizten Basiszonen und den unbeheizten Basisbereichen führt zu beträchtlichen thermischen Spannungen in der Basis, insbesondere wenn diese während einer Aufheizphase von einer unter 100° C bzw. bei Raumtemperatur liegenden Temperatur auf ihre genannte Betriebstemperatur in wenigen Sekunden aufgeheizt wird und eine nur verhältnismäßig geringe Wärmeleitfähigkeit von z.B. weniger als 70, 50 oder 30 Watt/m und Kelvin aufweist. Die am weitesten von den beheizten Basiszonen entfernten Stellen der unbeheizten Basisbereiche sind noch kalt, während die beheizten Basiszonen bereits angenähert ihre Betriebstemperatur erreicht haben. Dadurch kann die Basis bzw. die Heizeinheit oder die Beheizung beschädigt bzw. durch Spannungsbruch zerstört werden. Andererseits kann es für einen einfachen und insbesondere kostengünstigen Aufbau vorteilhaft sein, den Flächenanteil der beheizten Basiszonen gegenüber demjenigen der unbeheizten Basisbereiche nicht über die genannten Werte zu erhöhen, um möglichst wenig Widerstandsmaterial zu benötigen.

Der Erfindung liegt als Aufgabe auch zugrunde, Nachteile bekannter Ausbildungen zu vermeiden bzw. Vorteile der beschriebenen Art zu erzielen oder weiter zu verbessern und insbesondere eine Beheizung zu schaffen, welche bei kleiner Flächenausdehnung, geringem Aufwand an Widerstandsmaterial und verhältnismäßig großer Nennleistung eine hohe Funktionssicherheit bzw. Standzeit hat. Eine Aufgabe liegt auch darin, bei einfacher und kompakter Ausbildung von Bausatz-Einheiten im wesentlichen beliebige Anwendungen mit beliebiger Leistung zu ermöglichen.

Erfindungsgemäß sind die Merkmale nach Patentanspruch 1 vorgesehen. In mindestens einer Betriebsphase, insbesondere in der Aufheizphase, wird wenigstens ein unbeheizter Basisbereich, beispielsweise bezogen auf dessen von der benachbarten beheizten Basiszone am weitesten entfernte Stelle, so annähernd gleichlaufend mit der beheizten Basiszone durch Wärmebeaufschlagung temperiert, daß das Temperaturgefälle zwischen der beheizten Basiszone und dem unbeheizten Basisbereich wesentlich niedriger ist, als es wäre, wenn der unbeheizte Basisbereich nur durch Wärmeleitung innerhalb der Basis bzw. zwischen deren Außenflächen erfolgen würde.

Zweckmäßig wird die hierfür benötigte Wärmeenergie zum größten Teil bzw. ausschließlich vom Heizwiderstand bzw. von der beheizten Basiszone entnommen und dem unbeheizten Basisbereich über Wärmeleit-Querschnitte zugeführt, die auf dem größten Teil des Leitweges außerhalb der durch die Basis gebildeten Schicht bzw. außerhalb von deren Außenflächen liegen. Die Wärmeleitung erfolgt dabei von der Wärmekopplung mit dem Heizwiderstand quer zur Flächenerstreckung der Basis in einen Wärmeleiter und etwa parallel zur Basis entlang des Wärmeleiters sowie quer zurück in den unbeheizten Bereich. Dieser Wärmestrom kann schneller, von höherer Leistung und geringerem Temperaturabfall je Wegeinheit sein als derjenige Wärmestrom, welcher im wesentlichen parallel dazu durch die Basis unmittelbar an dieselbe Stelle des unbeheizten Basisbereiches gelangt. An dieser Stelle ergibt sich eine Art Wärmeleit-Kurzschluß.

Insbesondere wenn der Wärmeleiter die freiliegende thermische Abgabefläche der Beheizung an seiner von der Heizeinheit bzw. dem Heizwiderstand abgekehrten Seite bildet, kann bei der Aufheizung diese Seite heißer als die davon abgekehrte Seite der Heizeinheit bzw. der Basis sein. Der Wärmeleiter führt bei entsprechend guter thermischer Ankoppelung von der beheizten Basiszone soviel Wärme ab, daß diese einerseits wirksam gekühlt und andererseits mit dieser Wärme der unbeheizte Basisbereich rückbeheizt wird. So ist die gesamte Wärmeverteilung in der Heizeinheit bzw. der Basis auch in der Aufheizphase sehr gleichmäßig. Die Wärmeleitfähigkeit des Wärmeleiters ist zweckmäßig 3- bis mindestens 7- oder mehrfach höher als die der Basis. Der Wärmeleiter kann z.B. eine Wärmeleitfähigkeit von etwa 200 Watt/m und Kelvin haben. Die Basis hat eine Wärmeleitfähigkeit von etwa 24 Watt/m und Kelvin. Die Wärmeleitfähigkeit des Wärmeleiters kann derjenigen von Aluminium, Kupfer, Messing, wärmeleitfähigen Kunststoffen, Legierungen bzw. Mischungen aus den genannten Werkstoffen oder dgl. entsprechen. Sie sollte zweckmäßig mindestens 100 bzw. etwa 200 Watt/m und Kelvin betragen. Der Wärmeleiter kann aus einem der genannten Werkstoffe hergestellt sein und die Wärmeleitfähigkeit ist wesentlich höher als die von Stahl bzw. rostfreiem Edelstahl.

Stattdessen oder zusätzlich ist erfindungsgemäß vorgesehen, daß die Heizeinheit durch eine im wesentlichen vollflächige Anschlußverbindung bzw. eine Haftverbindung mit dem zu beheizenden Bauteil verbunden ist. Zum Beispiel ist im wesentlichen die gesamte, innerhalb der Außenkanten liegende Außenfläche der Basis lückenlos und gleichmäßig thermisch an diesen Bauteil gekoppelt, der den genannten Wärmeleiter bilden kann. Die Haftverbindung kann durch eine fließfähig aufgetragene und dann dauerelastisch ausgehärtete bzw. vernetzte Schicht aus einem elektrisch isolierenden Zwei-Komponenten-Kleber oder dgl., insbesondere einem Silikonkleber oder Silikonelastomer, durch ein doppelseitig haftendes Klebeband, eine Ultraschall-Verschweißung, eine unmittelbare Verpressung von aneinanderliegenden Oberflächen der Basis und des Wärmeleiters oder dgl. bzw. eine beliebige Kombination solcher Ausbildungen gebildet sein.

Die spezifische Wärmeleitfähigkeit der Anschlußverbindung kann in der Größenordnung der Basis bzw. des Wärmeleiters oder wesentlich darunter, nämlich beispielsweise bei etwa 1,04 Watt/m und Kelvin, liegen. Vorteilhaft wird die Anschlußverbindung durch Erhitzung bei etwa 100° bis 200° C bzw. bei einer Temperatur ausgehärtet, die etwa der Betriebstemperatur der Beheizung entspricht. Dadurch kann die Aushärt- bzw. Vernetzungszeit wesentlich verkürzt und/oder spannungsfrei bzw. spannungsarm gemacht werden.

Insbesondere, wenn der Heizwiderstand auf der dem Wärmeleiter zugekehrten Seite der Basis oder innerhalb der Anschlußverbindung liegt, kann im wesentlichen vollflächig in diese Anschlußverbindung noch mindestens eine Folie oder eine ähnliche elektrisch isolierende Schicht von wenigen 1000-stel Millimeter Dicke einbezogen sein. Diese ist z.B. mit einer Haftschicht unmittelbar am Heizwiderstand und der Basis sowie auf ihrer davon abgekehrten Seite mit einer weiteren, demgegenüber dickeren Haftschicht am Wärmeleiter jeweils über die gesamte Flächenausdehnung der Heizeinheit bzw. der Basis befestigt. Die nur einseitig oder beiderseits mit einer Haftschicht kaschierte Folie kann auch doppellagig sein. Zwischen den beiden Lagen kann eine Haftverbindung vorgesehen sein oder nicht, so daß die beiden Lagen auch ohne unmittelbare, abhebfeste Verbindung aneinander anliegen. Eine Lage ist haftend an der Basis bzw. am Heizwiderstand und die andere Lage mit ihrer davon abgekehrten Seite am Wärmeleiter haftend befestigt. Die Basis kann auch ohne Haftverbindung federnd an den Wärmeleiter angedrückt sein. Dadurch werden ggf. die Folienlagen aneinandergepreßt. Als Isolierfolie ist insbesondere eine Polyimid-Folie oder eine Folie mit entsprechenden Werkstoffeigenschaften geeignet. Die wärmeleitende Anschlußverbindung kann in Bereichen außerhalb des Widerstandes die Basis unmittelbar mit dem Wärmeleiter verbinden und z.B. über Kantenflächen, wie Außenkanten, der Basis vorstehen, sowie an diese Kantenflächen nach Art von Kehlnähten anschließen. So ist einerseits ein sicherer Halt der Heizeinheit und andererseits gewährleistet, daß thermisch verursachte Dickenänderungen der Anschlußverbindung nicht zu Belastungen des Heizwiderstandes führen.

Bei zwischenschichtfreier Befestigung der Basis an dem Wärmeleiter ergibt sich eine im wesentlichen unmittelbare Flächenverbindung zwischen diesen beiden Bauteilen. Ist eine Zwischenschicht vorgesehen, so liegt deren Dicke zweckmäßig im Bereich zwischen mindestens 10 µ und höchstens 1 bzw. 2 mm, wobei bevorzugt eine Dicke von weniger als 1/2 bzw. 1/10 mm, nämlich von etwa 50 µ vorgesehen ist. Dadurch bildet die Zwischenschicht auch bei gegenüber der Basis wesentlich geringerer Wärmeleitfähigkeit in ihrer Dickenrichtung keine nennenswerte Wärmeleitsperre, obwohl sie parallel zu ihrer Schichtebene wesentlich weniger wärmeleitend als die Basis wirkt. So sind die genannten Wärmeleitwege zur Rückbeheizung der unbeheizten Basisbereiche über den Wärmeleiter trotzdem gut wärmedurchlässig.

Die Zwischenschicht weist zweckmäßig einen gegenüber der Basis bzw. dem Wärmeleiter vielfach größeren thermischen Längen- bzw. Volumenausdehnungskoeffizienten auf. Letzterer beträgt jeweils etwa das 3-fache des Längenausdehnungskoeffizienten. Der Längenausdehnungskoeffizient des Wärmeleiters kann z.B. über 10 bzw. unter 30 oder 25 ppm/Kelvin liegen und etwa 1/6 bis 1/10 desjenigen der Zwischenschicht betragen. Der Längenausdehnungskoeffizient der Basis ist demgegenüber noch wesentlich kleiner und beträgt etwa 1/3 bis 1/4 desjenigen des Wärmeleiters bzw. höchstens etwa 1/20 desjenigen der Zwischenschicht. Der Längenausdehnungskoeffizient der Zwischenschicht kann zwischen etwa 150 und 250, insbesondere bei 200 ppm/Kelvin liegen. Dadurch können starke Unterschiede zwischen den thermischen Ausdehnungen der Basis und des Wärmeleiters gut aufgefangen werden, insbesondere auch, weil die Zwischenschicht mit zunehmender Erwärmung an Dicke und damit an Scherelastizität zunimmt. Aluminiumoxid-Keramik weist einen Längenausdehnungskoeffizient von etwa 6,5 und Aluminium einen Längenausdehnungskoeffizient von etwa 23,8 ppm/Kelvin auf. Die Zwischenschicht ist bis mindestens 300° C bzw. bis über die Betriebstemperatur der Beheizung dauertemperaturbeständig. Sie wirkt quer zu ihrer Schichtebene als Wärmeleiter, so daß sich ein sehr günstiger thermischer Wirkungsgrad des Wärmeübergangs von der Heizeinheit zur thermischen Abgabefläche des Wärmeleiters ergibt. Auch unterschiedliche Ausdehnungen der Basis in unterschiedlichen Basisbereichen können durch die Zwischenschicht gut aufgefangen werden.

Unabhängig von den beschriebenen Ausbildungen ist es vorteilhaft, wenn mindestens ein langgestreckter oder geradliniger bzw. zu mindestens einer Außenkante der Basis paralleler Abschnitt des jeweiligen Heizwiderstandes in mindestens 2 bis höchstens 30 in Serie hintereinandergeschaltete Widerstands-abschnitte unterteilt ist. Zwischen diesen Grenzwerten ist je nach den Erfordernissen jede weitere Zahl denkbar. Der Abstand zwischen benachbarten Widerstandsabschnitten ist kleiner als deren Länge bzw. Breite. Die Länge des jeweils langgestreckten Widerstandsabschnittes kann bis zu 3- oder 4-fach bzw. höchstens 6-fach größer als seine Breite sein und ist zweckmäßig etwa doppelt so groß wie diese Breite. Der Zwischenabstand entspricht nur etwa der Hälfte dieser Breite.

Die genannten Maße und Verhältnisse gelten insbesondere bei vollflächiger thermischer Ankoppelung der Widerstandsabschnitte auch für die beheizten Basiszonen. Auch im Winkel und Abstand aneinander anschließende Widerstandsabschnitte können vorgesehen sein. Vorteilhaft sind Widerstandsabschnitte hinsichtlich ihrer geometrischen bzw. thermisch wirksamen Anordnung annähernd gleichmäßig über den gesamten Umfang der Basis ringartig geschlossen sowie mit etwa konstantem Abstand von den Basisaußenkanten angeordnet. So ergibt sich eine sehr gleichmäßige thermische Belastung der Basis beim Anheizvorgang. Hierfür können auch die im Winkel in Serie aneinander anschließenden Widerstandsabschnitte geringfügig größer bzw. leistungsstärker als die dazu benachbarten Widerstandsabschnitte sein. Je nach geforderter Leistung von z.B. etwa 1000 Watt, kann auch im Abstand innerhalb eines äußeren, zu den Basisaußenkanten nächsten Heizwiderstandes mindestens ein weiterer Heizwiderstand angeordnet sein und ebenfalls etwa konstante Abstände zu den Basisaußenkanten haben bzw. ringartig geschlossen sein. Der jeweilige äußere bzw. innere Heizwiderstand kann in zwei etwa gleich große bzw. leistungsstarke Einzelwiderstände insofern unterteilt sein, als diese parallelgeschaltet angeschlossen sind, jedoch nur über zwei Anschlußstellen, die jeweils zwei benachbarte Widerstandsabschnitte verbinden.

Obwohl andere Widerstandsausbildungen möglich sind, ist es zweckmäßig, den jeweiligen Widerstand, Einzelwiderstand bzw. Widerstandsabschnitt als Dickschichtwiderstand auszubilden, der in pasteusem Zustand auf die zugehörige Außenfläche der Basis aufgedruckt und dann ausgehärtet wird, so daß er eine Schichtdicke von z.B. etwa 15 bis 20 µ hat. Der Werkstoff des Widerstandes ist vorteilhaft ruteniumoxidhaltig. Elektrisch leitende Leiterverbindungen zwischen den Widerständen, Einzelwiderständen bzw. Widerstandsabschnitten können durch Schichten der beschriebenen Art gebildet sein. Diese haben jedoch gegenüber den heizwirksamen Widerständen einen wesentlich geringen Widerstandswert und enthalten z.B. Silber, Paladium und/oder Platin. Ihre Schichtdicke kann zwischen etwa 12 und 15 µ liegen. Diese Leiterschichten, die auch zur elektrischen Verbindung mit Anschlußgliedern für Geräteleitungen, Steuerelementen oder dgl. dienen, werden zuerst auf die Basis aufgebracht. Danach werden die Widerstandsschichten so aufgebracht, daß beide Enden des jeweiligen Widerstandsabschnittes zwei im Abstand zueinander liegende Leiterschichten geringfügig überdecken und dadurch mit diesen elektrisch leitend verbunden sind.

Durch die beschriebene Ausbildung kann mit einem verhältnismäßig geringem Aufwand an Widerstandsmaterial bzw. bei verhältnismäßig geringem Flächenanteil der unmittelbar beheizten Basiszonen eine sehr hohe Heizleistung erreicht werden. Bei nur einem einzigen, entlang der Basisaußenkanten verlaufenden Heizwiderstand bzw. Heizkreis kann etwa 600 Watt Heizleistung und bei zwei ineinanderliegenden, gegebenenfalls parallelgeschalteten Heizkreisen kann ein Heizwiderstand von etwa 1000 Watt bei einer Flächengröße der Heizeinheit bzw. Basis von nur etwa 25 cm² erreicht werden. Eine solche Ausbildung eignet sich insbesondere zur Erwärmung bzw. Erhitzung der genannten Flüssigkeiten, weil diese dann über den Wärmeleiter als Aktivkühlung für die Heizeinheit bzw. die Basis dienen.

Die Plattendicke der Basis liegt zweckmäßig wesentlich unter oder etwa in der Größenordnung der Dicke des Wärmeleiters sowie vielfach über der Dicke der Zwischenschicht, nämlich zwischen mindestens etwa 0,4 bis höchstens 6 mm. Bevorzugte Zwischenwerte liegen bei 0,6, 0,8, 1,0 und 1,3 mm. Die Plattendicke ist zweckmäßig über die gesamte Erstreckung der Basis konstant, so daß sich eine sehr einfache Herstellung ergibt.

Unabhängig von den beschriebenen Ausbildungen ist es vorteilhaft, wenn Sicherungsmittel vorgesehen sind, welche bei einer Überhitzung und/oder Ablösung der Heizeinheit vom Wärmeleiter bzw. vom zu beheizenden Bauteil eine Unterbrechung der elektrischen Leistungszufuhr und/oder eine derartige Zerstörung der Heizeinheit bewirken, daß der durch sie gebildete Stromkreis unterbrochen wird. Ein Schutzschalter kann unmittelbar an der Basis, zweckmäßig an deren vom Wärmeleiter abgekehrten Außenseite, befestigt und mit dem jeweiligen Heizwiderstand thermisch im wesentlichen ausschließlich durch Wärmeleitung über die Basis, die Zwischenschicht und/oder den Wärmeleiter gekoppelt sein. So bewirkt ein thermodynamisch wirksames Fühlelement, wie ein Bimetall, die Abschaltung bereits, wenn es eine gegenüber dem Wärmeleiter niedrigere Temperatur hat. Diese, bei steigender Temperatur gegebene Wirkungsweise wird im Dauerbetrieb insbesondere dann umgekehrt, wenn ein Medium mit verhältnismäßig niedrigem Siedepunkt zwischen etwa 100° und 180° C erwärmt wird. In diesem Fall kann die Temperatur der Basis an ihrer vom Wärmeleiter abgekehrten Seite und im Zentrum des unbeheizten Basisbereiches höher liegen als auf der dem Wärmeleiter zugekehrten Seite.

Fällt dagegen die Heizeinheit wegen Zerstörung der thermischen Anschlußverbindung vom Wärmeleiter ab, so wird die Kühlwirkung durch den Wärmeleiter bzw. dem zugehörigen Bauteil und das zu beheizende Medium unterbrochen. Die Basis wird gegebenenfalls vor Ansprechen des Schutzschalters in kürzester Zeit so stark aufgrund der weiteren Leistungszufuhr partiell aufgeheizt, daß sie durch Wärmespannungen platzt, der Heizwiderstand im Bereich der Risse zwischen den Basis-Bruchstücken ebenfalls reißt und so der Stromkreis bereits nach höchstens 1 bis 2 oder 3 bis 4 Sekunden unterbrochen wird.

Der Schutzschalter, Anschlußglieder für Geräteleitungen oder dgl. können an der Basis durch Lötung bzw. mit Leiter- oder Lötpaste und/oder durch Schweißung befestigt werden. Dadurch ergibt sich eine wesentlich höhere Temperaturfestigkeit, die oberhalb derer der Zwischenschicht liegt. Um im Falle einer Heizeinheit mit zwei oder mehr Heizkreisen die genannten zusätzlichen Bauteile mit Abstand innerhalb des Außenumfanges der Basis unterbringen zu können, können die beiden Heizkreise geringfügig exzentrisch zueinander liegen. Dadurch sind zwischen ihnen unbeheizte streifenförmige Basisbereiche größerer und kleinerer Breite gebildet und die breiteren Basisbereiche für die Anordnung dieser Bauteile geeignet.

Als Schutzschalter sind insbesondere Unterbrecher bzw. Anordnungen geeignet, wie sie in der deutschen Patentanmeldung P 43 04 436.0 erläutert sind, auf die wegen weiterer Merkmale und Wirkungen zur Einbeziehung in die vorliegende Erfindung Bezug genommen wird. Im Gegensatz zu einem ebenfalls denkbaren PCT-Temperaturwächter kann auch ein mechanischer Temperaturschalter, wie ein Schnappschalter vorgesehen sein. Dieser kann durch eine gesonderte, gegenüber den Heizwiderständen wesentlich leistungsschwächere und mit diesen parallelgeschaltete Steuerbeheizung und/oder durch eine entsprechende thermische Verformung seines Bimetalles im Unterbrechungszustand gehalten werden, obwohl der oder die Heizwiderstände abgeschaltet sind.

Unabhängig davon kann die Beheizung eine Heizwiderstands-Anordnung aufweisen, die an der Basis mindestens eines Bausatz-Moduls angeordnet ist. Dieses Modul bzw. die Heizwiderstands-Anordnung ist über die Basis in gut wärmeleitender Verbindung an einem gegebenenfalls die Wärme-Abgabefläche bildenden Träger derart befestigt, daß sie ein gegenüber dem Modul wesentlich größeres Heizfeld beheizt. Insbesondere bei der Beheizung gasförmiger Medien kann die Wärme-Abgabefläche zumindest teilweise auch unmittelbar durch die Basis bzw. die Heizwiderstands-Anordnung gebildet sein, wenn diese vom Medienstrom umspült ist; auch unmittelbar von der Basis bzw. der Heizwiderstands-Anordnung ausgehende Strahlung kann zur Beheizung verwendet werden. Der Träger bildet z.B. allein den Wärmeleiter.

Die Beheizung weist an der Wärme-Abgabefläche zweckmäßig eine verhältnismäßig geringe Leistungsdichte von mindestens 0,1 bzw. 0,2 Watt/cm² bis höchstens 2 bzw. 3 Watt/cm² auf. Zwischen diesen Grenzwerten ist jeder weitere, um 0,1 veränderte Wert je nach den Erfordernissen denkbar. Die genannten niedrigeren Werte sind z.B. für Warmhalteflächen geeignet, während die genannten höheren Werte z.B. für Strahlungsheizer geeignet sind. Für eine Oberflächentemperatur der Abgabefläche von etwa 220° bis 230° C kann bei einem Strahlungsheizer jedoch bereits eine Leistungsdichte von 0,4 Watt/cm² ausreichend sein.

Gegenüber der jeweils zugehörigen Leistungsdichte an der Wärme-Abgabefläche bzw. des Trägers liegt die Leistungsdichte der Heizeinheit wesentlich höher, z.B. zwischen 1/2 und 15 bis 20 Watt/cm². Zwischen diesen Grenzwerten kann jeder weitere, um 1/2 Watt veränderte Wert je nach den Erfordernissen vorteilhaft sein. Alle genannten Werte können Mindest- oder Höchstgrenzen sein. Besonders zweckmäßig ist es, wenn die Leistungsdichte der Heizeinheit, bezogen auf deren zum Träger parallele bzw. größte Flächenerstreckung, um mindestens etwa das 10-fache über der Leistungsdichte des Trägers liegt.

Zur Erzielung dieses oder eines ähnlichen Verhältnisses der Leistungsdichten, können gesonderte Heizeinheiten an demselben Träger, an derselben Trägerseite, ebenenparallel zueinander und/oder mit zueinander parallelen Kanten in Abständen zueinander angeordnet werden. Diese entsprechen mindestens der Außenweite der Heizeinheit, um zwischen benachbarten Heizzentren bzw. Heizeinheiten im Träger ein signifikantes thermisches Gefälle zu haben, das sich insbesondere während des Aufheizens von Raumtemperatur auf die Dauer-Betriebstemperatur ergibt. Bei hoher Wärmeleitfähigkeit des die Heizenergie der jeweiligen Heizeinheit weit über deren Außenumfang hinaus verteilenden Trägers kann dieser dann im Dauerbetrieb über die gesamte Entfernung zwischen benachbarten Heizeinheiten annähernd konstante Temperatur haben. Heizeinheiten können in einem Zeilen- und/oder Spaltenraster linienförmig hintereinander bzw. in parallel nebeneinander liegenden Linien vorgesehen sein. Sie können quer zu den Linien miteinander fluchten und/oder in benachbarten Linien parallel zu diesen gegeneinander versetzt sein. Heizeinheiten können aber auch um eine zu ihrer Flächenausdehnung etwa parallele Achse verteilt, z.B. an einer polygonal abgewinkelten Wandung, wie am Mantel einer Rohrwandung, befestigt sein.

Die Anschlußfläche, mit welcher die jeweilige Heizeinheit am Träger befestigt ist bzw. dessen Gegenfläche ist zweckmäßig über die gesamte Flächenausdehnung der Heizeinheit bzw. der Basis durchgehend annähernd eben. So kann die Heizeinheit über ihre gesamte Flächenausdehnung bzw. bis zu ihren Außenkanten lückenlos gut wärmeleitend mit dem Träger verbunden werden. Die Anschlußfläche bzw. die Basis einerseits und die Gegenfläche bzw. der Träger andererseits sind wenigstens im Bereich der Anschlußfläche vorteilhaft im wesentlichen biege-, druck- bzw. zugfest, so daß sich eine hohe mechanische Stabilität ergibt. Benachbarte Heizeinheiten sind außer durch den Träger und eventuelle, nicht als Heizwiderstände wirkende elektrische Leitungsverbindungen unmittelbar nicht miteinander verbunden, so daß sich eine sehr einfache Herstellung der Beheizung ergibt.

Es ist auch denkbar, jeweils nur eine einzige Heizeinheit an einem z.B. plattenförmigen Träger vorzusehen, der Wärmeleitmittel bzw. eine Wärmeleitplatte bildet und in der beschriebenen Weise als Modul an einem zu beheizenden Körper so anzubringen ist, daß die von der Heizeinheit abgekehrte Wärme-Abgabefläche des Trägers im wesentlichen vollflächig und gut wärmeleitend an diesen Körper anschließt. Dieser Körper kann, wie im Falle einer Warmhalteplatte, eine wesentlich geringere spezifische Wärmeleitfähigkeit haben als der Träger. Benachbarte Träger oder Basen können mit Kanten annähernd unmittelbar ebenengleich oder ähnlich aneinander anstoßen bzw. in ihren Randbereichen miteinander verbunden sein. Es ist die Verwendung einer gut wärmeleitenden Verbindung möglich, die annähernd so gut wärmeleitend wie der übrige Träger wirkt. Die Heizeinheit kann im Bereich des Flächenzentrums des Trägers oder demgegenüber zum Außenumfang des Trägers versetzt vorgesehen sein, weist jedoch von diesem Außenumfang zweckmäßig in jedem Fall Abstand auf. Der Außenumfang des Trägers ist wie der der Heizeinheit zweckmässig zentrisch symmetrisch und/oder vieleckig, insbesondere rechteckig bzw. quadratisch, so daß sich vier im rechten Winkel zueinander liegende Außenkanten ergeben.

Bei entsprechend niedriger spezifischer Leistungsdichte bzw. bei hoher Wärmeentnahme durch den Träger kann die Beheizung ohne jeglichen Temperaturbegrenzer auskommen. Wird ein Temperaturbegrenzer, z.B. ein Bimetallschalter, vorgesehen, so kann dieser an nur einem Teil der Heizeinheiten bzw. an einer einzigen Heizeinheit angeordnet sein. Er kann so verschaltet sein, daß er nur diese Heizeinheit oder mehrere bis alle gegeneinander lagefesten Heizeinheiten der Beheizung jeweils hinsichtlich der gesamten Heizleistung oder nur eines Teiles davon abschaltet, um eine Leistungsreduzierung zu erzielen. Der Temperaturbegrenzer schaltet bei Unterschreiten einer vorbestimmten Temperatur zweckmäßig von selbst wieder ein.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im Folgenden näher erläutert. In den Zeichnungen zeigen:
- Fig. 1: eine erfindungsgemäße Beheizung in Ansicht auf die Heizebene,
- Fig. 2: die Heizeinheit gemäß Fig. 1 in Ansicht parallel zur Heizebene,
- Fig. 3: einen Ausschnitt der Fig. 2 in wesentlich vergrößerter, geschnittener und um 180° verdrehter Darstellung,
- Fig. 4 und 5: weitere Ausführungsformen in Darstellungen nach Fig. 3,
- Fig. 6 und 7: eine weitere Ausführungsform in Darstellungen entsprechend den Fig. 1 und 2,
- Fig. 8 und 9: zwei weitere Ausführungsformen in Darstellungen entsprechend Fig. 6,
- Fig. 10: eine weitere Beheizung in Ansicht auf die Heizebene,
- Fig. 11: die Heizeinheit gemäß Fig. 10 in Ansicht parallel zur Heizebene,
- Fig. 12 und 13: ein weiteres Ausführungsbeispiel in Darstellungen entsprechend den Fig. 10 und 11,
- Fig. 14: einen Strahlungsheizer in Ansicht auf die Strahlseite,
- Fig. 15: den Strahlungsheizer gemäß Fig. 14 in Längsansicht,
- Fig. 16: eine Beheizung für eine Warmhalteplatte in Ansicht auf die Unterseite,
- Fig. 17: die Beheizung gemäß Fig. 16 in Längsansicht,
- Fig. 18: eine Beheizung für ein Heizgebläse in Ansicht,
- Fig. 19: die Beheizung gemäß Fig. 18 in Seitenansicht und
- Fig. 20: ein Gebläse mit der Beheizung gemäß den Fig. 18 und 19.

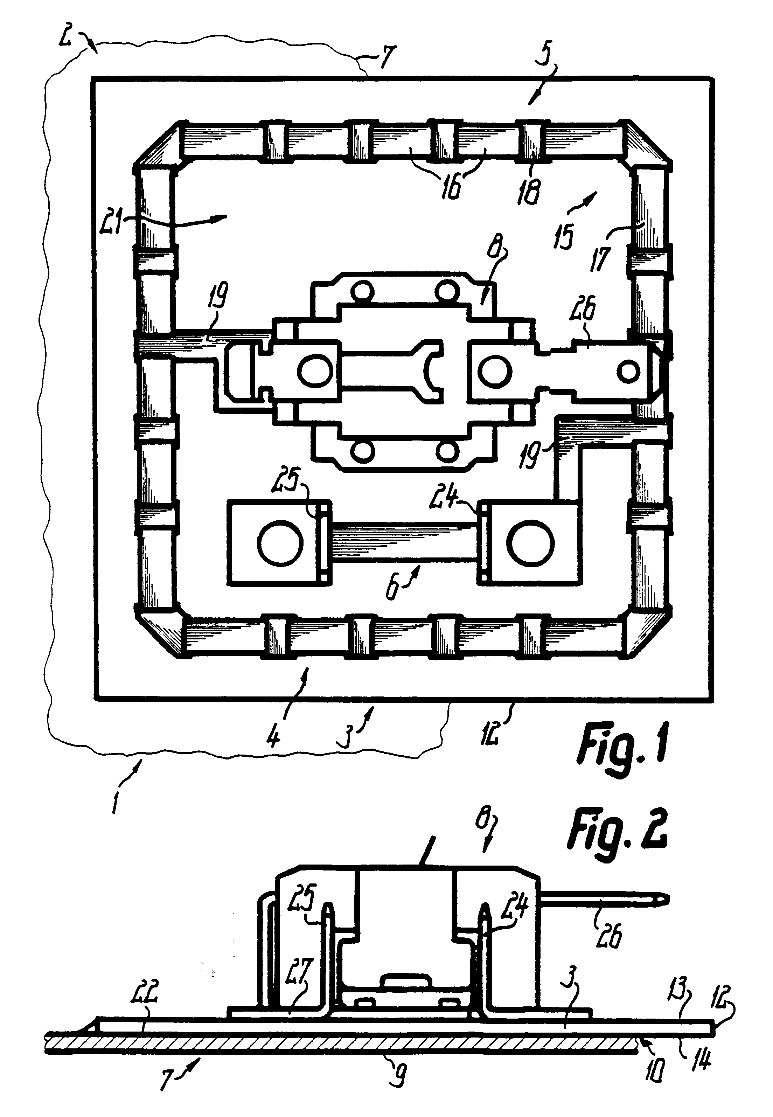

Die Beheizung 1 weist eine vollständig als vormontierte Baueinheit ausgebildete Heizeinheit 2 auf. Diese weist als flächengrößten sowie in Ansicht gem. Fig. 1 an einer bis vier Seiten am weitesten vorstehenden Bauteil eine plattenförmige Basis 3 auf, welche den Träger für alle übrigen Bestandteile der Heizeinheit 2 bildet. Die aus einer ebenen Platte herausgetrennte Basis 3 ist im wesentlichen zug-, druck- und/oder biegesteif, spröde brechend und über ihre Gesamtdicke durchgehend einteilig aus Keramik oder dgl. mit einer Dicke in der Größenordnung von etwa 1 mm hergestellt. Sie trägt eine Widerstandsanordnung 4 mit im wesentlichen zwei Heizwiderständen 5, 6, von denen einer oder beide näher bei den Außenkanten der Basis 3 als bei deren Zentrum liegen können. Ein vom jeweiligen Heizwiderstand im wesentlichen eingeschlossenes Feld ist flächengrößer als das diesen außen umgebende bzw. das von ihm bedeckte Feld. Die Basis 3 ist mit einer Plattenfläche an Wärmeleitmitteln bis zu ihrem Außenumfang befestigt, welche im wesentlichen durch einen plattenförmigen Wärmeleiter oder Träger 7 mit einer Dicke in der Größenordnung von 2 mm gebildet ist. Im Bereich der Basis 3 ist der Wärmeleiter 7 durchgehend eben sowie ebenenparallel zur Basis 3 vorgesehen. Auf der vom Wärmeleiter 7 abgekehrten Seite trägt wie Basis 3 im Feld innerhalb eines äußeren Heizwiderstandes 5 bzw. annähernd im Zentrum einen Schalter 8 oder dgl.. Dieser kann über diese Plattenseite um mehr als die Plattendicke vorstehen und ist z.B. als Bimetall-Schnappscheiben-Thermostat ausgebildet. Der Schutzschalter 8 kann den Stromkreis nur für eine Teilleistung bzw. einen Widerstand oder alle Widerstände unterbrechen und einen Überlastschutz bilden.

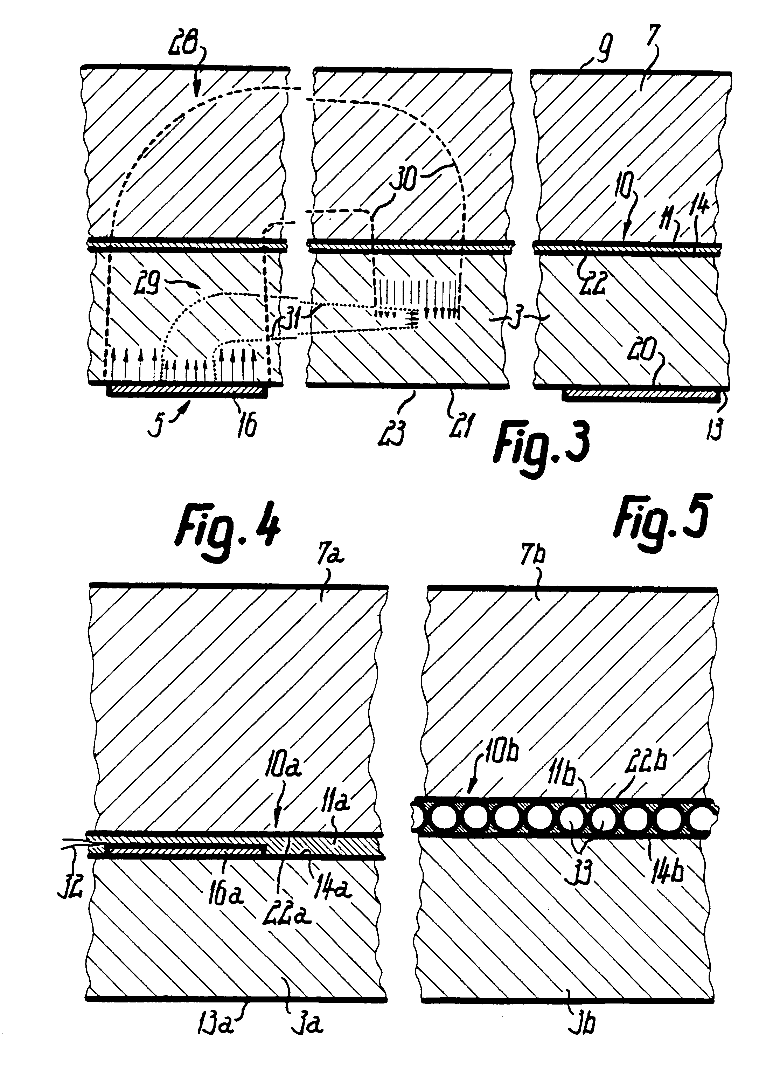

Die der Basis 3 zugekehrte und/oder die davon abgekehrte Fläche des Wärmeleiters 7 kann unmittelbar diejenige Abgabefläche 9 bilden, über welche das zu beheizende Medium durch Berührung bzw. Anlage und wärmeleitenden Übergang thermisch zu beaufschlagen ist. Der Wärmeleiter 7 ist wenigstens in diesem Bereich über seine im wesentlichen konstante Dicke durchgehend einteilig ausgebildet. An der davon abgekehrten ebenen Seite ist ausschließlich die Basis 3 der Heizeinheit 2 mit einer Anschlußverbindung 10 befestigt. Diese kann eine sehr dünne Zwischenschicht 11 enthalten bzw. im wesentlichen nur durch diese gebildet sein. Die Anschlußverbindung 10 hat zwischen dem Wärmeleiter 7 und der Basis 3 praktisch keinerlei Wärmespeicherkapazität, sondern gibt die von der Basis 3 kommende Wärme nahezu verzögerungsfrei an den Wärmeleiter 7 ab, bildet jedoch eine elektrische Zwischenisolierung. Die Zwischenschicht 11 reicht im wesentlichen nur bis zu den im rechten Winkel zueinander liegenden Außenkanten 12 der quadratischen Basis 3 und kann darüber geringfügig vorstehen, so daß sie gemäß Fig. 2 im einspringenden Winkel zwischen der Kantenfläche 12 und der zugehörigen Oberfläche 22 des Wärmeleiters 7 eine verdickte Kehlnaht bildet. Hier sind alle Bauelemente der Heizeinheit 2 an der vom Wärmeleiter 7 abgekehrten Plattenfläche 13 vorgesehen, so daß die davon abgekehrte Befestigungs- bzw. Plattenfläche 14 ausschließlich aus einem einzigen, porigen Werkstoff besteht, welcher eine sehr gute Haftverbindung mit dem Wärmeleiter 7 gewährleistet. Der Wärmeleiter 7 steht über alle Außenkanten 12 um mehr als die Außenweite der Basis 3 vor.

Der an der Plattenfläche 13 angeordnete, strangförmig langgestreckte Heizwiderstand 5 verläuft mit konstantem und in der Größenordnung seiner Strangbreite liegendem Abstand parallel zu den Außenkanten 12. Er bildet ohne Abzweigungen einen geschlossenen, leitenden und rechteckigen bzw. quadratischen Ring, der vom Zentrum der Basis 3 einen 3- bis 5-fach größeren Abstand als vom Außenumfang 12 hat. Der Heizwiderstand 5 ist in zwei Einzelwiderstände 15 etwa gleicher Flächengröße bzw. gleichen Widerstandswertes unterteilt, die jeweils Uförmig mit unterschiedlicher Schenkellänge ausgebildet sowie parallel geschaltet sind. Jeweils zwei Schenkel beider Einzelwiderstände 15 fluchten miteinander und sind mit ihren einander zugekehrten Enden gemeinsam leitend angeschlossen.

Der Widerstand 5 bzw. der jeweilige Einzelwiderstand 15 besteht aus in Serie hintereinander geschalteten Widerstands-Abschnitten 16, 17 von etwa 1,5 bis 4 oder 3 mm Breite und 4 bis 10 oder 5 bis 7 mm Länge, deren einander zugekehrte Enden in einem Abstand von etwa 1 bis 2 mm voneinander liegen. Die Abschnitte 16, 17 sind parallel zum Widerstand bzw. zum jeweiligen Strangabschnitt langgestreckt rechteckig, fluchten miteinander und weisen über ihre Länge durchgehend konstante Widerstandsquerschnitte auf. Ihre Enden sind über schichtförmige Leiter 18, 19 miteinander verbunden, die quer zum Widerstand 5 langgestreckt sind bzw. eine gegenüber den Abschnitten 16, 17 geringfügig größere Breite haben. Die Leiter 18, 19 werden von den Enden der Abschnitte 16, 17 um etwa 1/2 bis 1 mm unmittelbar aufeinander liegend überlappt und so durch Schichtverbund mit diesen elektrisch leitend verbunden. Im Bereich der zusammenfallenden Eckzonen des Widerstandes 5 und der Basis 3 ist der jeweilige Leiter dreieckförmig ausgebildet und verbindet zwei im Winkel zueinander liegende Abschnitte 17, die geringfügig länger bzw. von höherer Heizleistung als die zwischen ihnen liegenden Abschnitte 16 sind. Die Eckzonen der Basis 3 sind so etwa gleich thermisch belastet, wie deren zwischen diesen Eckzonen liegende Streifenbereiche. Alle Abschnitte 16, 17 haben jedoch gleiche Breite, Dicke bzw. Widerstandsquerschnitte. Im Bereich jedes geradlinigen Längsabschnittes des Widerstandes 5 sind drei kürzere bzw. gleich lange und zwei längere sowie ihrerseits ebenfalls gleich lange Abschnitte 16, 17 vorgesehen.

Jeder Widerstands-Abschnitt 16, 17 ist über seine gesamte Flächenausdehnung thermisch unmittelbar eng und vollflächig an die poröse Plattenfläche 13 angekoppelt, wodurch die Koppelfläche der Basis 3 eine unmittelbar beheizte Basiszone 20 bestimmt, die etwa um 1/5 kleiner als die Restfläche der Plattenfläche 13 ist. Diese Restfläche bestimmt einen unbeheizten Basisbereich 21 insofern, als dieser nur durch Wärmeleitung über den Querschnitt der Basis 3 von den Abschnitten 16, 17 und nicht wie die Basiszone 20 unmittelbar beheizt wird. Ist die Basis 3 an der von der Abgabefläche 9 abgekehrten Oberfläche 22 des Wärmeleiters 7 befestigt, so wird der Basisbereich 21 insbesondere über diesen Wärmeleiter 7 durch die Abschnitte 16, 17 beheizt; die von den Leitern 18 bedeckten Anteile des Basisbereiches 21 sind jedoch von den Abschnitten 16, 17 so eng flankiert, daß sie auch überwiegend durch Wärmeleitung in der Basis 3 beheizt sein können.

In Fig. 3 ist bei 23 das geometrische und thermische Zentrum des Basisbereiches 21 der Basis 3 bzw. des vom Widerstand 5 umschlossenen Feldes angedeutet. Dieses Zentrum 23 ist von dem in Fig. 3 nicht dargestellten Schalter 8 so überdeckt, daß dessen Temperaturfühler wärmeleitend eng an das Zentrum 23 bzw. die Plattenfläche 13 angekoppelt ist. Einer der Leiter 19 erstreckt sich vom Widerstand 5 unter den Schalter 8 bzw. einen an diesem vorgesehenen Anschluß, welcher mit dem Leiter 19 durch Lötung, Schweißung oder dgl. flächig verbunden sein kann.

Der andere Leiter 19 ist an ein Anschlußglied 24 für eine Geräteleitung angeschlossen, welches mit Abstand benachbart zum Schalter 8 innerhalb des vom Widerstand 5 umschlossenen Feldes an der Plattenfläche 13 befestigt ist. Beide Leiter 19 greifen mit ihren zugehörigen Enden in der anhand des Leiters 18 beschriebenen Weise zwischen die Enden zweier Abschnitte 16 bzw. zweier miteinander fluchtender Widerstandsschenkel ein. Parallel zu der am nächsten liegenden Außenkante 12 und mit etwa gleichen Abständen von den quer dazu liegenden Außenkanten 12 ist mit Abstand benachbart zum Anschlußglied 24 innerhalb des genannten Feldes ein weiteres, gleichartiges Anschlußglied 25 vorgesehen, das hier mit dem Anschlußglied 24 über einen durchgehend einteiligen Heizwiderstand 6 elektrisch leitend verbunden ist. Dieser Widerstand 6 liegt parallel zum am nächsten benachbarten Abschnitt des Widerstandes 5 bzw. zur zugehörigen Außenkante 12 und mit Abstand zwischen diesem Abschnitt und dem Schalter 8 in dem genannten Feld. Er ist wie die Abschnitte 16, 17 als Schichtwiderstand etwa gleicher Breite, jedoch größerer Länge ausgebildet und sein Bereich gehört zur beheizten Basiszone 20.

Durch die Aufteilung in Abschnitte 16, 17 bzw. 6 weist der einzelne Abschnitt eine Nennleistung von mindestens 5 oder 10 bis höchstens 100 oder 50 Watt auf, wobei die Abschnitte 16 zweckmäßig eine Leistung von etwa 20 Watt und die Abschnitte 17 eine demgegenüber annähernd um die Hälfte größere Leistung von etwa 30 Watt haben. Der jeweilige Abschnitt des Widerstandes 6 kann eine demgegenüber größere Leistung von etwa 50 Watt bzw. eine kleinere Streifenbreite haben. Ist der Heizwiderstand 6 nicht vorgesehen, so ist das Anschlußglied 25 zweckmäßig mit dem dem Anschluß des Schalters 8 dienenden Leiter 19 elektrisch verbunden.

Der Schalter 8 weist im Abstand von der Basis 3 ein etwa parallel zu dieser frei ausragendes Anschlußglied 26 für eine Geräteleitung auf. Zum elektrischen Anschluß der Heizeinheit 2 wird, je nachdem, ob der Heizwiderstand 6 betrieben werden soll oder nicht, eines der beiden Anschlußglieder 24, 25 sowie das Anschlußglied 26 an eine Geräteleitung angeschlossen. So wird der Strom über den Schalter 8 dem Widerstand 5 bzw. den Einzelwiderständen 15 und ggf. dem Widerstand 6 zugeführt. Von den Anschlußgliedern 24, 25 kann dann eines bzw. das frei gebliebene zum Anschluß einer weiteren Heizeinheit 2 dienen, nämlich mit einem von deren Anschlußgliedern 24 bis 26 verbunden werden. Benachbarte Heizeinheiten können in Serie und/oder Parallelschaltung miteinander verbunden werden.

Die Anschlußglieder 24 bis 26 sind z.B. durch Stecker, wie Flachsteckzungen, gebildet, an welchen die Geräteleitungen mit entsprechenden Gegensteckern zerstörungsfrei leicht lösbar angeschlossen werden können. Die Anschlußglieder 24, 25 sind durch winkelförmige Platten gebildet. Deren einer Winkelschenkel bildet das Anschlußglied 24, 25, während der andere Platten- bzw. Winkelschenkel 27 mit seiner Plattenaußenseite vollflächig an der Plattenfläche 13 durch Schweißen, Löten oder dgl. befestigt ist. Zur Befestigung der Anschlußglieder bzw. des Schalters sind keine Durchbrüche oder Vertiefungen in der Basis 3 erforderlich. Die Anschlußglieder 24, 25 stehen rechtwinklig bzw. parallel zueinander von der Plattenfläche 13 der Basis 3 ab und weisen eine entsprechende Steckrichtung auf. Ein Teil der Leiterschichten oder alle Leiterschichten bzw. an diesen befestigte Anschlußteile können mit einer elektrisch isolierenden Schicht, z.B. mit Silikon im wesentlichen vollflächig bzw. geringfügig über ihre Flächenausdehnung hinaus abgedeckt sein. Diese Schicht kann ein Elastomer sein und aus ihr heraus stehen nur die Anschlußglieder 24, 25 vor.

Vom jeweiligen Widerstands-Abschnitt 16 bzw. der unmittelbar beheizten Basiszone 20 führt ein Wärme-Leitweg 28 quer durch die Basis 3, die Zwischenschicht 11 in den einschichtigen Wärmeleiter 7, entlang diesem sich über die gesamte Erstrekkung des unbeheizten Basisbereiches 21 ausbreitend sowie durch die Zwischenschicht 11 zurück in die Basis 3 und zu deren Plattenfläche 13. In Fig. 3 sind insbesondere die Verhältnisse hinsichtlich des Zentrums 23 angedeutet und der Schalter ist nicht dargestellt. Ein entsprechender Wärme-Leitweg 29 führt vom jeweiligen Abschnitt 16 zwischen den Plattenflächen 13, 14 unmittelbar entlang der Basis 3 zur jeweils selben Stelle. Die Abstände zwischen benachbarten bzw. einander gegenüberliegenden Widerstandsabschnitten, die Querschnittsbemessungen der Wärmeleiter 3, 7, 11 und deren physikalische Materialeigenschaften, insbesondere deren Wärmeleitfähigkeiten, sind so aufeinander abgestimmt, daß der Wärmestrom 30 entlang des Leitweges 28 alle diejenigen Stellen des Basisbereiches 21 schneller und mit höherer Heizleistung erreicht als der Wärmestrom 31 entlang des Leitweges 29, welche bereits in verhältnismäßig geringem Abstand von den Basiszonen 20 liegen. Dieser Abstand kann etwa in der Größenordnung der Streifenbreite des Widerstandes 5 bzw. 6, der Basiszone 20 bzw. des zwischen dieser und der benachbarten Außenkante 12 vorgesehenen unbeheizten Streifens liegen, gegenüber welchem der entsprechende Abstand des Zentrums 23 und daher der thermischen Ankopplung des Schalters 8 wesentlich größer ist.

Hinsichtlich seiner Schaltfunktion wird daher der Schalter 8 im wesentlichen nur durch den Wärmestrom 30 und allenfalls vernachlässigbar auch durch den Wärmestrom 31 beaufschlagt, wenn beim Anheizvorgang ein zunächst starkes Temperaturgefälle zwischen der Basiszone 20 und dem Basisbereich 21 ausgeglichen wird. Durch diese Wärmefluß-Differenz zwischen den Wärmeströmen 30, 31 erfolgt von außerhalb der Basis 3 eine sehr schnelle Erwärmung der Basisbereiche 21 über die gesamte Basisdicke. Diese Erwärmung läuft nur sehr geringfügig derjenigen hinterher, welche in der Basiszone 20 über die Basisdicke gegeben ist. Alle genannten Eigenschaften können auch nur angenähert bzw. im wesentlichen wie angegeben oder davon wesentlich abweichend vorgesehen sein.

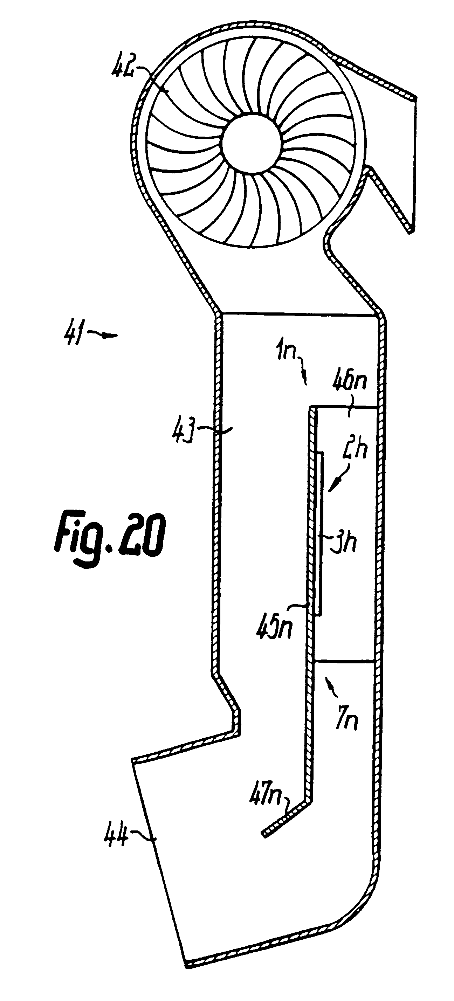

In den Figuren 1 bis 20 sind für einander entsprechende Teile die gleichen Bezugszeichen, jedoch mit unterschiedlichen Buchstaben-Indizes verwendet, weshalb alle Beschreibungsteile sinngemäß für alle Ausführungsformen gelten und die Merkmale aller Ausführungsformen beliebig miteinander kombinierbar sind.

Die Heizwiderstände können auch ausschließlich an der Plattenfläche 14a oder an beiden Plattenflächen 13a, 14a vorgesehen sein. Die Plattenfläche 13 bzw. 13a kann im Betriebszustand wie die zugehörigen Widerstände im wesentlichen unabgedeckt freiliegen. Der Widerstands-Abschnitt 16a ist gemäß Fig. 4 bis auf seine Anschlußfläche zur Plattenfläche 14a vollständig eng umschlossen in die Zwischenschicht 11a eingebettet. Er hat jedoch vom zug-, druck- und/oder biegesteifen Wärmeleiter 7a bzw. von dessen Oberfläche 22a einen Abstand, der mindestens so groß wie seine Dicke ist. An der der Oberfläche 22a zugekehrten Schichtfläche des Widerstandes 16a kann zusätzlich zur elektrisch isolierenden Zwischenschicht 11a eine weitere Isolierschicht, z.B. eine doppellagige Folie 32 aus Polyimid oder dgl., haftend anliegen. Das Material der Zwischenschicht 11a greift zwischen diese Folie 32 und den Widerstand 16a sowie zwischen die Oberfläche 22a und die Folie 32 ein. Der vom Widerstand 16a ausgehende Wärmestrom braucht nicht die Dicke der Basis 3a zu durchlaufen, sondern gelangt über die Oberfläche 22a unmittelbar in den Wärmeleiter 7a, so daß er die zugehörigen unbeheizten Basisbereiche noch schneller aufheizt. Die Folie 32 kann gegenüber dem Abschnitt 16a mit dem Material der Zwischenschicht 11a oder dgl. verklebt sein und eine gegenüber der Dicke der Zwischenschicht 11a wesentlich kleinere Dicke haben. Der vom Widerstand 16a ausgehende Wärmestrom braucht nicht die Dicke der 0 Basis 3b zu durchlaufen, sondern kann im wesentlichen nur über die Oberfläche 22a unmittelbar in den Träger 7a gelangen, so daß er die zugehörigen unbeheizten Basisbereiche noch schneller aufheizt.

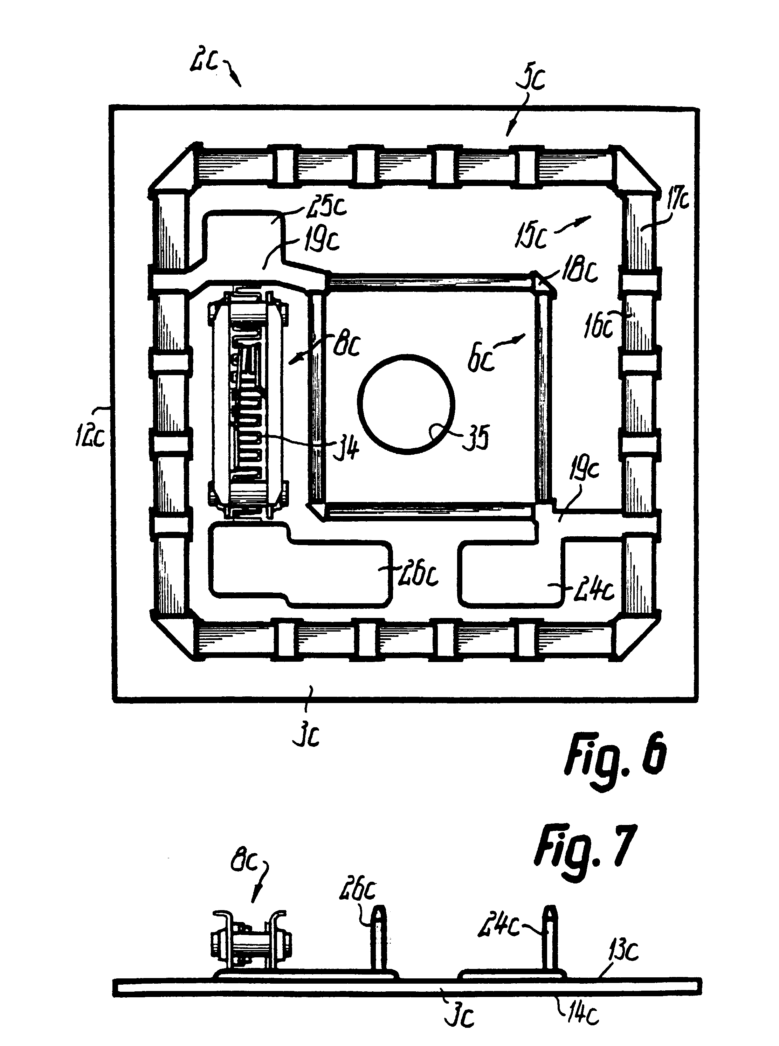

Gemäß Fig. 5 kann die Zwischenschicht 11b auch so ausgebildet sein, daß ihre Wärmeleitfähigkeit mindestens so groß wie die der Basis 3b bzw. des Wärmeleiters 7b oder demgegenüber größer ist. Die Zwischenschicht 11b kann auch verhältnismäßig dick ausgebildet werden. In eng anliegendem Kontakt mit den Oberflächen 14b, 22b können wärmeleitende Partikel aus Kupfer oder dgl. vorgesehen sein, welche druckfeste Distanzglieder zwischen der Basis 3b und dem Wärmeleiter 7b bilden und z.B. durch kleinste Kugeln oder dgl. gebildet sind. Zwischen den Oberflächen 14b, 22b ist nur eine Lage von Partikeln 33 vorgesehen und benachbarte Partikel sind durch unmittelbare gegenseitige Anlage thermisch eng aneinander angekoppelt. Alle Resträume sind mit dem genannten elastischen bzw. haftenden Material, wie einem Kleber, ausgefüllt, welcher auch die Partikel 33 eng umschließt und gegeneinander lagesichert. Die der Partikelgröße gleiche Dicke der Zwischenschicht 11b kann auch hier weit unterhalb von 2 oder 1 mm liegen. Bei dieser Ausbildung kann ein Teil des Wärmestromes 30 auch entlang der Anschlußverbindung 10b in die Basisbereiche 21 fließen.

Gemäß den Figuren 6 und 7 ist der Heizwiderstand 6c ebenfalls durch um ein Zentrum sich erstreckende, im Winkel zueinander liegende und ringartig geschlossene Widerstandsabschnitte gebildet. Sie gehen jeweils zwischen zwei Eckbereichen einteilig durch, sind in den Eckbereichen durch Leiterschichten 18c elektrisch leitend miteinander verbunden und liegen parallel zum jeweils am nächsten benachbarten Längsabschnitt des Widerstandes 5c. Die Heizleistung des jeweiligen Abschnittes des Widerstandes 6c kann größer als die der Abschnitte 16c, 17c sein. Seine Streifenbreite ist gegenüber der der Abschnitte 16c, 17c zweckmäßig kleiner. Alle Widerstände werden an allen Basisseiten vom Außenumfang 12c überragt.

Der Widerstand 6c ist gegenüber dem Zentrum des Widerstandes 5c bzw. der Basis 3c geringfügig exzentrisch versetzt. Die zwischen beiden Widerständen 5c, 6c begrenzte, rechteckig ringartig geschlossene Streifenzone der Plattenfläche 13c bildet einen Winkelstreifen mit größerer Streifenbreite und einen Winkelstreifen mit kleinerer Streifenbreite jeweils beider Winkelschenkel. In einem Schenkel des breiteren Winkelstreifens ist der langgestreckte Schalter 8c parallel zu diesem Schenkel angeordnet. Im anderen breiteren Winkelschenkel sind die Anschlußglieder 24c, 26c befestigt. Von diesen sind in Fig. 6 nur die Leiterfelder angedeutet, auf welchen die Anschlußglieder zu befestigen sind. Das Leiterfeld 25c für das dritte Anschlußglied befindet sich im Übergangsbereich zwischen einem schmaleren und einem breiteren Streifenschenkel. Es bildet mit dem einen Leiter 19c eine gemeinsame Leiterschicht.

Der Widerstand 6c ist seinerseits in zwei Einzelwiderstände etwa gleicher Leistung unterteilt. Sie sind jeweils winkelförmig und bestehen aus zwei in Serie hintereinander geschalteten, jeweils geradlinigen Widerstands-Abschnitten. Die Einzelwiderstände des Widerstandes 6c sind parallel geschaltet. Jeweils einer von zwei diagonal einander gegenüberliegenden Eck-Leitern 18c bildet mit dem zugehörigen Leiter 19c eine gemeinsame Leiterschicht, wodurch auch der Widerstand 6c bzw. dessen Einzelwiderstände mit dem Widerstand 5c bzw. dessen Einzelwiderstände 15c parallelgeschaltet sind. Das Anschlußglied 26c ist in diesem Fall unmittelbar an der Basis 3c bzw. der Plattenfläche 13c in der beschriebenen Weise mit einem Schenkel 27 befestigt, so daß der Schalter 8c nur über Leiterschichten der Basis 3c anzuschließen ist. Zwischen den Leiterfeldern 25c, 26c erstreckt sich unter dem Schalter 8c eine mäanderförmig verlaufende Steuerheizung 34, die unmittelbar auf das Schalt-Bimetall des hier als Schnappschalter ausgebildeten Schalters 8c wirkt und auch bei geöffnetem Schalter 8c weiter betrieben wird. So schließt der Schalter 8c nicht wieder, sondern bleibt nach Art einer Selbsthaltung geöffnet, weil die Steuerheizung 34 trotz Abschaltens der Widerstände 5c, 6c an die Leiterfelder 25c, 26c angeschlossen und daher in Betrieb bleibt.

Die beiden einander entlang eines Streifenschenkels gegenüberliegenden Leiterschichten bzw. Anschlüsse tragen oder bilden jeweils das winkelförmige Anschlußglied 24c bzw. 26c für die Geräteleitung. Das Anschlußglied 26c dient zur Zuführung zum Schalter 8c und das Anschlußglied 24c zur unmittelbaren Stromzuführung zu den beiden Widerständen 5c, 6c bzw. jeweils beiden zugehörigen Einzelwiderständen. Beide, einander etwa diagonal gegenüberliegende Leiter 19c der Anschlüsse 24c, 25c greifen mit ihren zugehörigen Enden wie die Leiter 18c zwischen die Enden zweier Abschnitte 16c, 17c bzw. zweier miteinander fluchtender Widerstandsschenkel des Widerstandes 5c bzw. zweier im Winkel zueinander liegender Widerstandsschenkel des Widerstandes 6c ein. Dadurch ergeben sich die genannten Parallelschaltungen. Der eine Leiter 19c dient lediglich zum Anschluß des Ausganges des Schalters 8c mittels einer flächig auf einer einseitigen seitlichen Verbreiterung 25c befestigten Anschlußplatte. Mit einer ähnlichen Anschlußplatte ist der Schalter 8c an der dem Anschluß 26c zugehörigen Leiterschicht befestigt. Diese Anschlußbefestigungen stellen gleichzeitig die einzige Befestigungsverbindung des Schalters 8 mit der Basis 3 dar.

Die lichte Weite des vom Widerstand 6c umschlossenen und das Zentrum einschließenden Feldes ist größer als die Breite des den Widerstand 6c bis zum Widerstand 5c umgebenden Streifenfeldes. Die Basis 3c kann im Bereich des Zentrums mit einem kreisförmigen oder anderen Durchbruch 35 versehen sein, dessen Weite etwa in der Größenordnung der mittleren Streifenbreite dieses Streifenfeldes liegen kann und der mit Abstand vom Widerstand 6c liegt. Dadurch können thermische Spannungen im Zentrum der Basis 3c noch weiter vermieden werden. Bei dieser Ausführungsform liegt das thermisch wirksame Schaltglied des Schalters 8c etwa in der Mitte zwischen zwei benachbarten Längsabschnitten der beiden Widerstände 5c, 6c. So fließen von beiden Längsabschnitten annähernd gleiche Wärmeströme durch den hier nicht näher dargestellten Wärmeleiter zu diesem Schaltglied und erreichen dieses durch die Steuerbeheizung 34 hindurch.

Da der Selbsthalte-Widerstand 34 einen wesentlich höheren Widerstandswert als der Schalter 8c hat, ist er bei geschlossenen Kontakten des Schalters 8c im wesentlichen stromlos. Nach Öffnen des Kontaktes bzw. erst bei Erreichen eines kritischen Stromwertes wird der Widerstand 34 mit der für die Selbsthaltung des Schalters 8c notwendigen Leistung beaufschlagt. Erst dann, wenn die Leistungszufuhr zur Heizeinheit 2 über die Geräteleitungen unterbrochen wird, wird auch der Widerstand 34 stromlos und die Kontakte des Schalters 8c schließen wieder.

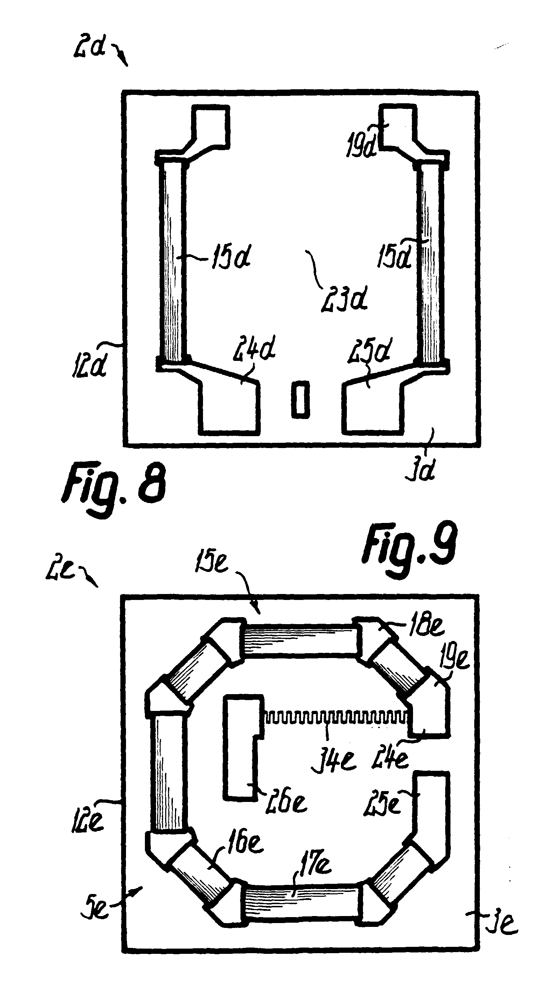

Bei der Ausführungsform nach Fig. 8 sind nur zwei zueinander parallele, geradlinige und jeweils einteilig durchgehende Einzelwiderstände 15d parallel zu zwei Außenkanten 12d vorgesehen. Der Abstand zwischen den beiden Einzelwiderständen 15d bzw. vom Zentrum 23d ist wesentlich größer als der Abstand von der jeweils unmittelbar benachbarten Außenkante 12d. Die beiden Einzelwiderstände 15d sind unter Zwischenschaltung des nicht näher dargestellten, quer zu ihnen liegenden und an Leiter 19d angeschlossenen Schutzschalters in Serie miteinander geschaltet. Die Anschlüsse 24d, 25d sind mit den vom Schalter abgekehrten Enden der Einzelwiderstände 15d verbunden. Eine solche Ausbildung eignet sich insbesondere für Leistungen unter 100 bzw. 50 Watt, während die Ausbildung nach den Figuren 6 bis 7 für Leistungen bis mindestens 1000 Watt und die Ausbildung nach den Figuren 1 und 2 für Leistungen bis mindestens 600 Watt geeignet ist.

Auch bei der Ausbildung gemäß Fig. 9 ist die Widerstandsanordnung 34e nur durch einen einzigen Serienwiderstand 15e gebildet. Er weist längere und zur jeweils benachbarten Außenkante 12e parallele Abschnitte 17e sowie um etwa die Hälfte kürzere Abschnitte 16e auf, die schräg zu den Abschnitten 17e bzw. etwa symmetrisch zur Winkelhalbierenden der zugehörigen Eckzone der Basis 3e liegen. Dadurch ist eine an eine Kreisform angenäherte Polygonalform des Widerstandes 15e gebildet. Jede Polygonalkante ist durchgehend einteilig durch einen einzigen Abschnitt 16e, 17e gebildet. Aneinanderschließende Abschnitte 16e, 17e sind über einen Leiter 18e miteinander verbunden. Die Anzahl der Abschnitte 17e ist um einen Abschnitt geringer als diejenige der Abschnitte 16e. So ist der Ring nicht vollständig geschlossen, sondern im Bereich der Anschlußglieder 24e, 25e offen. Innerhalb der Ringform liegt das Anschlußglied 26e, das gemeinsam mit dem Anschlußglied 24e die Anschlüsse für die Beheizung 34e des nicht näher dargestellten Schalters bildet. Die Beheizung 34e ist ebenfalls in der beschriebenen Weise als Schichtwiderstand ausgebildet und an der Basis 3e angebracht.

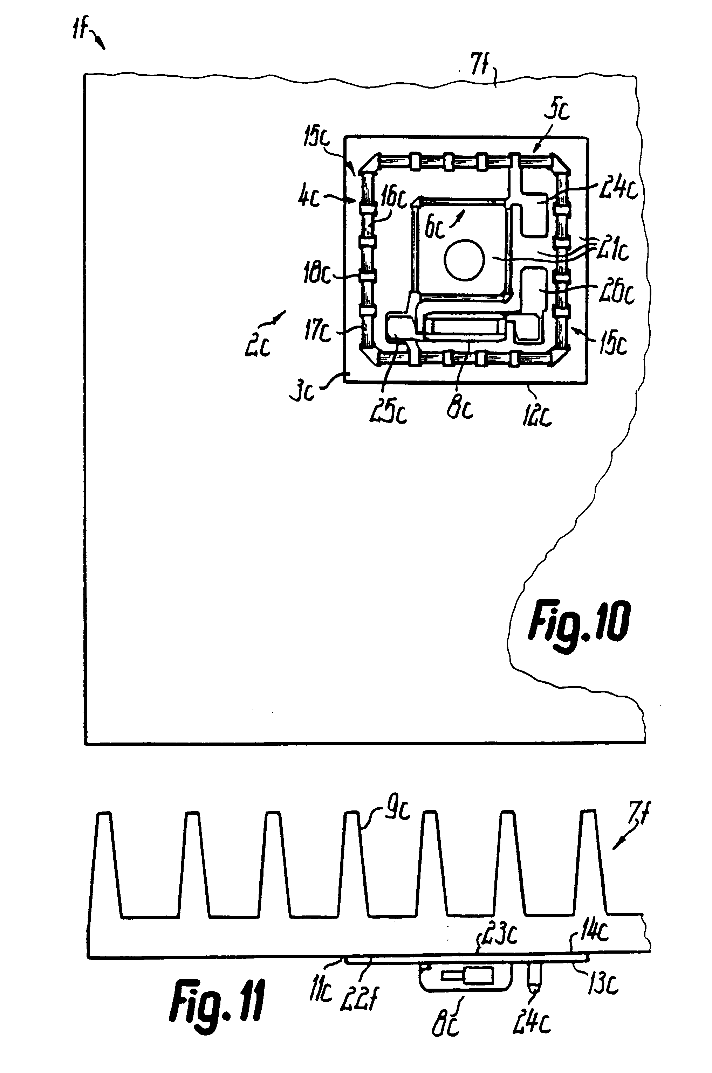

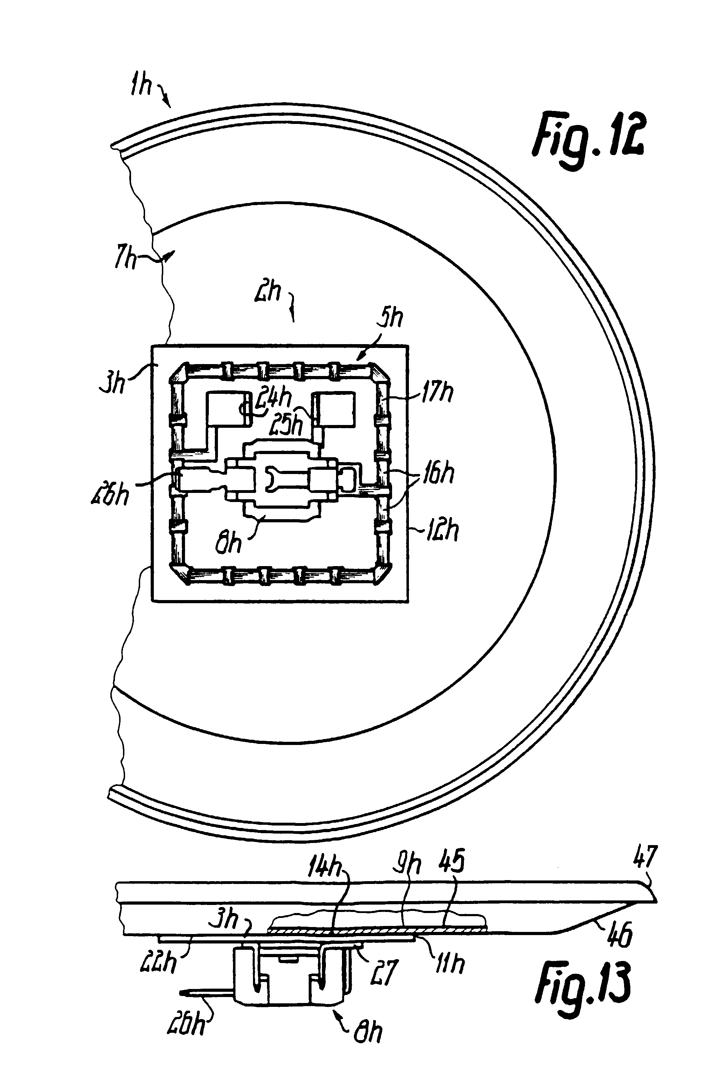

Der Träger 7f gemäß den Fig. 10 und 11 bildet Wärmeleitmittel zur Verteilung der Wärme sowohl weit über den Außenumfang 12c hinaus bzw. bis zum Außenumfang des Trägers 7f als auch zum Zentrum der Basis 3c. Im Bereich der Basis ist die der Heizeinheit 2c gemäß Fig. 6 zugehörige Oberfläche 22f des Trägers 7f durchgehend eben sowie ebenenparallel zur an ihm befestigten Plattenfläche 14c der Basis 3c ausgebildet. Die von der Basis 3c abgekehrte Abgabefläche 9f ist durch verrippte Ausbildung des Trägers 7f mehrfach größer als die zugehörige Grundfläche. Der Träger 7f wirkt nach Art eines von Luft umspülten Kühlkörpers. Die Basis 3c liegt mit ihrem Zentrum 23c etwa im Zentrum der Trägers 7f und weist von dessen Außenumfang Abstände auf, die mindestens etwa so groß wie ihre Außenweite sind. Gemeinsam mit dem Träger 7f bildet hier die Heizeinheit 2c ein vormontiertes Baumodul, das einzeln oder gemeinsam mit mehreren gleichen oder ähnlichen Modulen als Beheizung 1f montiert werden kann. Der Schalter 8c bzw. dessen thermisch wirksames Fühlglied wird ebenfalls durch Wärmeleitung über den Basisbereich 21c thermisch beaufschlagt.

Die Beheizung 1h gemäß den Fig. 12 und 13 dient als Erhitzerschale für Wasser und kann den Schalenboden für ein nach oben über die Beheizung vorstehendes Wassergefäß bilden. Eine solche Beheizung ist z.B. zur Wassererwärmung, Dampferzeugung, für ein Sterilisiergerät zur Sterilisierung von Kleinkind-Trinkflaschen, für einen Eierkocher oder für eine Kaffeemaschine geeignet. Der in Ansicht quer zur Heizebene runde bzw. kreisrunde Träger 7h weist einen kreisrunden sowie eben plattenförmigen Boden 45 mit ebenenparallelen und durchgehend ebenen Oberflächen 9h, 22h auf. Der Boden 45 geht am Außenumfang in einen kegelstumpfförmig flach über die Abgabefläche 9h ansteigenden Ringmantel 46 über, dessen Rand im Querschnitt ringwulstförmig in Richtung des Bodens 45 zurückgekrümmt ist. Am Scheitel dieses Randes 47 kann eine Dichtung für einen Gefäßmantel anschließen, dessen Boden dann der Träger 7h bildet. Die Heizeinheit 2h ist ähnlich Fig. 1 ausgebildet und an der Unterseite des wie der Träger 7 einteilig aus Aluminium bestehenden Trägers 7h bzw. des Bodens 45 im Zentrum befestigt. Der Außenumfang 12h der Basis 3h hat vom Mantel 46 einen mittleren Abstand, der in der Größenordnung von etwa der Hälfte der kleinsten Außenweite der Basis 3h liegen kann.

Die beiden Anschlußglieder 24h, 25h bzw. deren Leiterschichten sind hier nicht über den Heizwiderstand 6 miteinander verbunden. Das Anschlußglied 25h ist über eine Leiterschicht an den Ausgang des Schalters 8h, nicht jedoch an den Widerstand 5h angeschlossen. Dadurch eignet es sich zum Anschluß einer weiteren Heizeinheit, die dann ebenfalls über den Schalter 8h geschaltet ist. Der Widerstand 5h bildet den einzigen Widerstandsring. Der Wärme-Leitweg 28 führt quer nur durch die Basis 3h und die Zwischenschicht 11h in den einschichtigen Trägerboden 45 und dann weiter, wie erläutert.

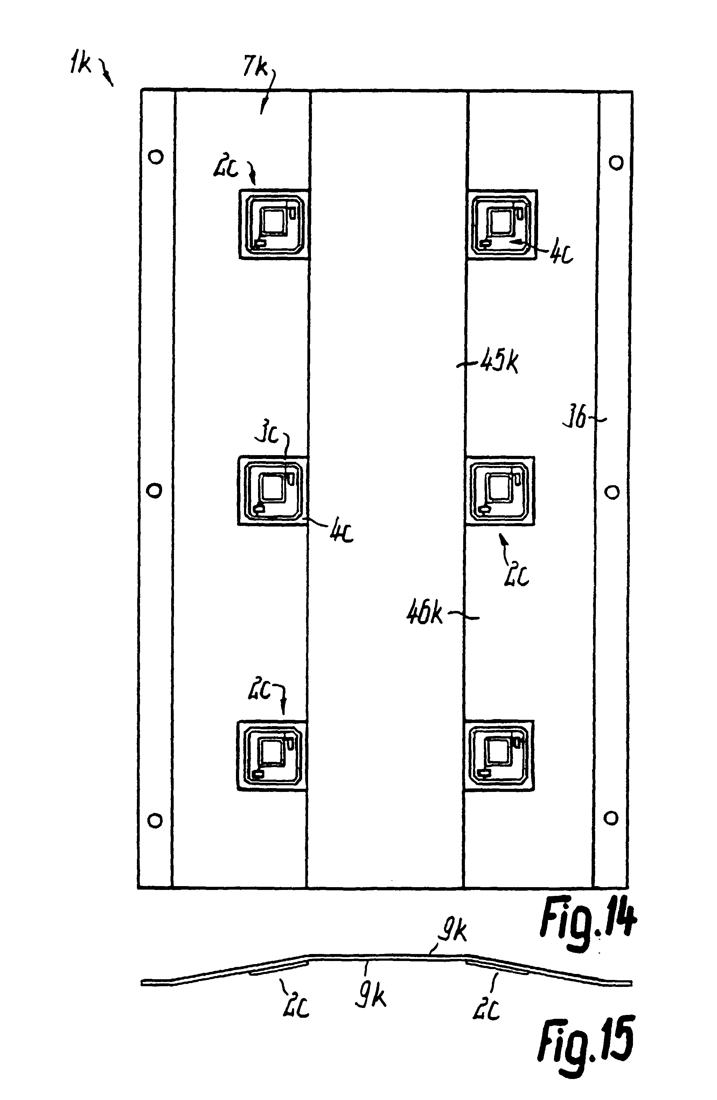

Die Fig. 14 und 15 zeigen eine Konvektor-Beheizung 1k. Sie weist als Träger 7k einen Aluminium-Blechkörper auf, welcher zur Versteifung und einfachen Befestigung über seine Länge durchgehend konstant nur durch Abwinkelungen profiliert ist. Seine beiden Längsränder 36 bilden Befestigungsstreifen zur Befestigung in einem Heizergehäuse. Die Profil-Längsrichtung des langestreckten Trägers 7k ist in Höhenrichtung ausgerichtet. Der Träger 7k weist z.B. einen ebenen Mittelstreifen 45k und beiderseits an diesen im stumpfen Winkel anschließende Seitenstreifen 46k. Diese gehen ihrerseits in die ebenengleich liegenden Ränder 36 über, so daß eine Rinnenform gebildet ist. An den Innenseiten der Seitenstreifen 46k sind unmittelbar im Anschluß an den Mittelstreifen 45k Heizeinheiten 2c befestigt. Zwei Reihen von Heizeinheiten 2c sind beiderseits der Längsmittelebene des Trägers 7k vorgesehen.

Diese Heizeinheiten 2c, die jeweils eine Widerstands-Anordnung 4c gemäß Fig. 6 aufweisen, sind in gleichmäßigen Zwischenabständen vorgesehen, welche 2- bis 4-fach größer als die Außenweite bzw. die Kantenlänge einer Basis 3c sind. Alle Heizeinheiten 2c sind über nicht näher dargestellte Verbindungsleitungen in Serie und/oder parallel miteinander verschaltet. Eine Temperaturbegrenzung der beschriebenen Art kann vorgesehen sein. Die Heizeinheiten 2c erhitzen im wesentlichen den gesamten Träger 7k, so daß entlang von dessen beiden Plattenseiten Luft von unten nach oben strömt und gleichzeitig erwärmt wird. Die Heizeinheiten 2c liegen dabei geschützt im Innern der Rinne. Sie nehmen nur etwa mindestens 1/10 bis höchstens 1/20, insbesondere etwa 1/13 der Flächen-größe des Trägers 7k ein. Dieser wird aufgrund seiner guten Wärmeleitfähigkeit im wesentlichen über seine gesamte Flächenausdehnung annähernd gleichmäßig erhitzt.

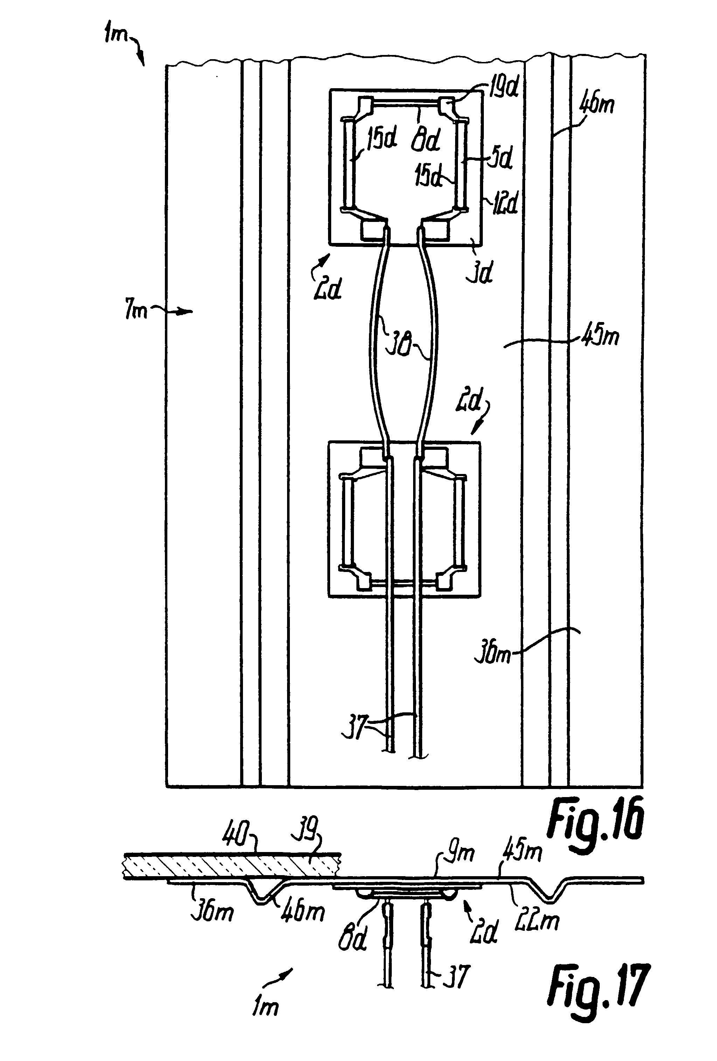

Die Beheizung 1e gemäß den Fig. 16 und 17 ist insbesondere für Warmhaltegeräte vorgesehen, wie sie als flaches Standgerät zum Warmhalten von Kochgefäßen, Speisegeschirr und ähnliches verwendet werden. Der in Ansicht langgestreckte rechteckige Träger 7m weist einen mittleren, durchgehend ebenen Streifenbereich 45m und beiderseits darin anschließende, schmalere sowie ebenfalls durchgehend ebene Streifenbereiche 36m auf, welche in der Ebene des mittleren Streifens 45m liegen. Zwischen den Streifenbereichen 45m, 36m ist jeweils eine entgegen der Abgabefläche 9m vorstehende Versteifungssicke 46m ausgeformt. Sie steht über die Oberfläche 22m weiter vor als die Heizeinheit 2d gemäß Fig. 8 einschließlich der Überlastsicherung 8d, so daß diese seitlich beiderseits durch Flanken abgeschirmt ist. An der Abgabefläche 9m der Streifenbereiche 45m, 36m liegt ein Wärme-Vermittlungskörper 39 mit seiner zugehörigen ebenen Plattenseite vollflächig an. Der Plattenkörper 39 kann mit dem Träger 7d unmittelbar haftend verbunden sein. Die Abgabefläche 9m kann auch ohne haftende Verbindung lediglich federnd gegen die Unterseite des Plattenkörpers 39 angelegt sein. Der Plattenkörper 39 kann aus Metall, wie Stahlguß, Keramik, wie Glaskeramik, oder dgl. bestehen. Er ist dicker als der Träger 7m. Seine obere, von der Heizeinheit lm abgekehrte sowie durchgehend ebene Oberfläche bildet eine Wärme-Übertragungsfläche 40 bzw. eine Standfläche für die zu erwärmenden Gegenstände. Ferner bildet der Plattenkörper 39 die Oberseite eines nicht näher dargestellten Gehäuses, in welchem die Beheizung 1d vollständig umschlossen angeordnet ist.

Entlang des Streifenbereiches 45m sind im Abstand hintereinanderliegend zwei Heizeinheiten 2d von jeweils etwa 45 Watt Nennleistung angeordnet, die gemeinsam über zwei Geräteleitungen 37 angeschlossen und untereinander durch zwei Verbindungsleitungen 38 so miteinander verbunden sind, daß die beiden Heizeinheiten 2d parallel geschaltet sind. Die Abschnitte 15d liegen jeweils nahe benachbart zu einer von zwei parallelen Außenkanten 12d. Die Länge jedes Abschnittes 15d ist größer als die Hälfte der zugehörigen Außenweite der Basis 3d. Die Abschnitte 15d sind über eine Querverbindung ihrer zugehörigen Enden in Serie geschaltet. Diese Querverbindung kann durch eine Schmelzsicherung 8d, z.B. einen im Abstand parallel zur Basis 3d die zugehörigen Leiterschichten 19d verbindenden Draht, gebildet sein, dessen Enden mit Lötstellen an den Leiterschichten 19d befestigt sind.

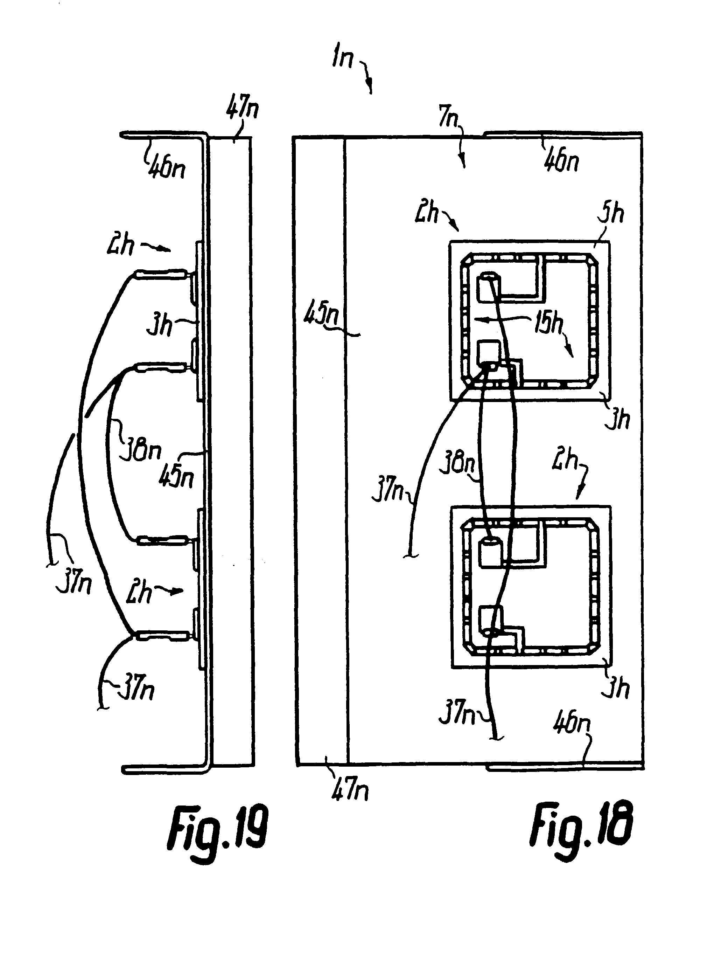

Gemäß den Fig. 18 bis 20 ist die Beheizung 1n für eine Gebläseeinheit 41 vorgesehen. Die Widerstands-Anordnungen können anstatt mit Netzstrom von etwa 120 bzw. 230 Volt auch mit Niederspannung von 12 bzw. 24 Volt betrieben werden, so daß sich die Gebläseeinheit 41 zur Beheizung von Kraftfahrzeugen eignet. Der Träger 7n weist eine ebene Platte 45n mit zwei entsprechend Fig. 1 bzw. 12 ausgebildeten Heizeinheiten 2h auf. Sie liegen quer zur Strömungsrichtung nebeneinander. An den Schmalkanten ist die Platte 45n zur Bildung von in gleicher Richtung ausragenden Stegen 46n abgewinkelt. An einer Längsseite ist ein in entgegengesetzter Richtung stumpfwinklig abgewinkelter Streifen vorgesehen. Die Widerstände 5h der beiden Heizeinheiten 2h sind mit Geräte- und Verbindungsleitungen 37n, 38n in Serie geschaltet. Sie bilden jedoch jeweils zwei parallel geschaltete Einzelwiderstände 16f.

Die Gebläseeinheit 41 weist an einem Ende eines Strömungs-Kanales 43 bzw. eines Gehäuses einen Tangentialgebläse-Rotor 42 mit Ansaugstutzen und am anderen Ende des Kanales 43 einen gegenüber diesem annähernd rechtwinklig abgewinkelten Luftaustritt 44 auf. In dem dazwischenliegenden, annähernd geradlinigen Teil des Kanales 43 ist die Beheizung 1n so angeordnet, daß sie sich mit ihren beiden Stegen 46n an einer quer zu diesen liegenden Kanalwandung abstützen kann, ihre Grundplatte 45n von der gegenüberliegenden Kanalwandung Abstand hat, die Heizeinheiten 2h zwischen den Stegen 46n liegen und die Grundplatte 45n mit dem Luftleitsteg 47n in Strömungsrichtung frei ausragt. Der Leitsteg 47n liegt etwa in der Mitte des abgewinkelten Austragstutzens und ist von innen gegen den Austritt 44 gerichtet. Die Grundplatte 45n liegt etwa parallel zum zugehörigen Kanalabschnitt. Dadurch wird die Grundplatte 45n wie auch der Leitsteg 47n einschließlich der Heizeinheiten 2h an beiden Plattenseiten von Luft umströmt, die dadurch erwärmt wird. Auch die Stege 46n können an der Innen- bzw. Außenseite umströmt sein und dadurch ebenfalls zur Wärmeabgabe dienen.

## Patentansprüche

1. Beheizung mit einer Heizeinheit (2), die eine Basis (3) und mindestens einen mit dieser in wenigstens einer beheizten Basiszone (20) unmittelbar thermisch gekoppelten Heizwiderstand (5, 6) einer Widerstandsanordnung (4) sowie mindestens einen Basisbereich (21) aufweist, welcher mittelbar durch Wärmeleitung eines Wärmestromes (21) entlang eines ersten Wärme-Leitweges (29) der Basis (3) mit dem jeweiligen Heizwiderstand (5, 6) thermisch gekoppelt ist, wobei Mittel (7) vorgesehen sind, mit welchen der jeweilige Basisbereich (21) über einen zweiten Wärme-Leitweg (28) durch einen zusätzlichen Wärmestrom (30) beheizt wird, dadurch gekennzeichnet, daß der zweite Wärme-Leitweg (28) im Vergleich zu den ersten Wärme-Leitweg (29) länger ist, und daß der jeweilige Basisbereich (21) über den zweiten Wärme-Leitweg (28) wenigstens so schnell beheizt wird, wie durch Wärmeleitung entlang des ersten Wärme-Leitweges (29) der Basis (3).

2. Beheizung nach Anspruch 1, dadurch gekennzeichnet, daß die Wärmeleitmittel (7) zwischen den thermischen Zentren der Basiszone (20) und des Basisbereiches (21) einen geringeren Wärmeleitwiderstand als die Basis (3) aufweisen, daß insbesondere die Wärmeleitfähigkeit der Wärmeleitmittel zwischen mindestens drei- bis siebenfach höher als die Wärmeleitfähigkeit der Basis (3) ist, und daß vorzugsweise die Wärmeleitmittel im Bereich der Basiszone (20) bzw. im Basisbereich (21) gleichmäßig vollflächig mit der Basis (3) thermisch gekoppelt sind.

3. Beheizung nach Anspruch 1 oder 2, dadurch gekennzeichnet, daß die Basis (3) mit den Wärmeleitmitteln (7) durch eine wärmeleitende Anschluß- bzw. Haftverbindung (10), wie eine Klebung, Verschweißung, unmittelbare Oberflächenverpressung oder dgl., verbunden ist, daß insbesondere die Anschlußverbindung (10) eine Dicke von unter 1 mm, 1/10 mm bzw. 1/100 mm hat, und daß vorzugsweise die Anschlußverbindung (10) über 100° bzw. 150° hitzebeständig ist und Eigenschaften eines Silikonelastomers aufweist.

4. Beheizung nach einem der vorhergehenden Ansprüche, dadurch gekennzeichnet, daß die Wärmeleitmittel (7) eine Wärme-Abgabefläche (9) zur unmittelbaren Wärmeübertragung in das zu beheizende Medium aufweisen, daß insbesondere die Wärmeleitmittel (7) flächengrößer als die dazu etwa parallele Flächenausdehnung der Basis (3) bzw. der Anschlußverbindung (10) sind, und daß vorzugsweise die Wärmeleitmittel (7) Kühlmittel für den durch die Heizeinheit (2) beheizten Bereich bilden sowie in mindestens zwei zueinander rechtwinkligen Richtungen über eine äußere Umfangskante (12) der Basis (3) vorstehen.

5. Beheizung nach einem der vorhergehenden Ansprüche, dadurch gekennzeichnet, daß die Wärmeleitmittel (7) plattenförmig mit einer mindestens etwa in der Größenordnung der Dicke der Basis (3) liegenden Plattendicke sind, daß insbesondere die Wärmeleitmittel (7) eine gegenüber der Basis (3) mindestens zweifach größere bzw. gegenüber der Anschlußverbindung (10) mehrfach kleinere thermische Längenausdehnung aufweisen, und daß vorzugsweise die Wärmeleitmittel (7) eine gegenüber einer Zwischenschicht (11) zwischen der Basis (3) und den Wärmeleitmitteln (7) vielfach größere Wärmeleitfähigkeit aufweisen.

6. Beheizung nach einem der vorhergehenden Ansprüche, dadurch gekennzeichnet, daß die Heizeinheit (2), bezogen auf die Flächenausdehnung der Basis (3), eine Leistungsdichte von mindestens 5 bzw. 10 bis höchstens 20 bzw. 30 Watt/cm² bzw. bezogen auf die Flächenausdehnung der Basiszone (20) von mindestens 20 bis 200 Watt/cm² aufweist, daß insbesondere der Basisbereich (21) mindestens 3-fach und höchstens 20-fach größer als die Basiszone (20) ist, und daß vorzugsweise die Nenn-Heizleistung der Heizeinheit (2) mindestens 100 bis 1000 Watt beträgt.

7. Beheizung nach einem der vorhergehenden Ansprüche, dadurch gekennzeichnet, daß die Basis (3) eine Außenweite von mindestens 9 bis 25 mm und höchstens 150 bis 200 mm aufweist, daß insbesondere die Basis (3) eine Dicke von mindestens 0,4 und höchstens 8 mm aufweist, und daß vorzugsweise die Basis (3) bzw. die Basiszone (20) im wesentlichen zentrisch symmetrisch, wie quadratisch, ausgebildet bzw. thermisch belastet ist.

8. Beheizung nach einem der vorhergehenden Ansprüche, dadurch gekennzeichnet, daß der Heizwiderstand (5, 6) einen auf wenigstens eine Oberfläche (13, 14) der Basis (3) kaschierten Schichtwiderstand von weniger als 1/10 mm Schichtdicke umfaßt, daß insbesondere der Heizwiderstand (5) durch in Serie aufeinanderfolgende sowie über kurze widerstandsarme Leiterabschnitte (18) verbundene Widerstands-Abschnitte (16, 17) gebildet ist, und daß vorzugsweise mindestens ein ringartig im wesentlichen geschlossener Heizwiderstand (5) unter Bildung zweier Parallelwiderstände (15) etwa gleicher Leistung mit elektrischen Anschlüssen (24 bis 26) verbunden ist.

9. Beheizung nach einem der vorhergehenden Ansprüche, dadurch gekennzeichnet, daß ein langgestreckter Heizwiderstand (5) mit einem etwa seiner Breite entsprechenden Abstand entlang einer Außenkante (12) der Basis (3) bzw. ein langgestreckter Heizwiderstand (6c) mit einem mindestens einem Fünftel der zugehörigen Außenweite der Basis (3c) entsprechenden Abstand von der zu ihm etwa parallelen und am nächsten liegenden Außenkante (12c) der Basis (3c) vorgesehen ist, daß insbesondere mindestens zwei Heizwiderstände (5c, 6c) wenigstens teilweise etwa parallel zueiannder bzw. ringartig ineinanderliegend vorgesehen sind, und daß vorzugsweise der innerer Heizwiderstand (6c), bezogen auf die Basis (3c), flächenspezifisch eine geringere Leistung als der äußere Heizwiderstand (5c) hat.

10. Beheizung nach einem der vorhergehenden Ansprüche, dadurch gekennzeichnet, daß der Basisbereich (21) zur Aufnahme von Anschluß- und/oder Steuermitteln (24, 25 bzw. 8) vorgesehen ist, daß insbesondere wenigstens ein Teil der Widerstandsanordnung (4) der Heizeinheit (2) mit einer Schutzeinrichtung (8), wie einem über die Wärmeleitmittel (7) thermisch gesteuerten Temperaturwächter, gesichert ist, und daß vorzugsweise die Heizeinheit (2) so justiert ist, daß sie bei von den Wärmeleitmitteln (7) abgekoppeltem Betrieb durch die Heizleistung unter Unterbrechung des Stromkreises zerstört wird.

11. Beheizung nach einem der vorhergehenden Ansprüche, dadurch gekennzeichnet, daß die Basis (3) durch eine Platte gebildet ist und wenigstens teilweise aus einem elektrischen Isolierwerkstoff, wie Keramik bzw. AL₂O₃ besteht, daß insbesondere der Heizwiderstand (5, 6) an der von den Wärmeleitmitteln (7) abgekehrten und/oder der den Wärmeleitmitteln (7a) zugekehrten Plattenseite (13 bzw. 14a) vorgesehen ist, und daß vorzugsweise die Basis (3b) mit den Wärmeleitmitteln (7b) über eine Körnungs-Schicht (33) aus gegenüber der Basis (3b) wesentlich besser wärmeleitfähigem Werkstoff, wie Kupfer, thermisch gekoppelt ist.

12. Beheizung nach einem der vorhergehenden Ansprüche, dadurch gekennzeichnet, daß die Widerstandsanordnung (4c) mit der Basis (3c) eine vormontierte Heizeinheit (2c) bildet und insbesondere die Basis (3c) in wärmeleitender Verbindung an einem Träger (7f) derart befestigt ist, daß sie ein gegenüber der Heizeinheit (2c) wesentlich größeres Heizfeld des Trägers (7f) im wesentlichen gleichmäßig beheizt, wobei vorzugsweise der Träger (7f) die Wärmeleitmittel bildet.

13. Beheizung nach Anspruch 12, dadurch gekennzeichnet, daß mehrere Heizeinheiten (2e) im Abstand zueinander an dem Träger (7k) angeordnet sind, daß insbesondere mindestens eine Heizeinheit (2h) eine plattenförmige Basis (3h) aus einem Isolierwerkstoff mit einer Befestigungsfläche (14h) für den wärmeleitenden Träger (7h) aufweist, und daß vorzugsweise mindestens zwei Heizeinheiten (2d) in einem wenigstens ihrer Außenweite entsprechenden Zwischenabstand bzw. gleichmäßig rasterartig verteilt an dem Träger (7m) befestigt sind.

14. Beheizung nach Anspruch 12 oder 13, dadurch gekennzeichnet, daß für den Träger (7f) eine Leistungsdichte von wenigstens 0,1 bis höchstens 4 Watt/cm² vorgesehen ist, daß insbesondere im wesentlichen alle an dem Träger (7k) vorgesehenen Heizeinheiten (2c) gleiche Nennleistungen von mindestens 50 bis höchstens 350 Watt aufweisen, und daß vorzugsweise die Heizeinheit (2c) auf eine Betriebstemperatur von höchstens 250° bzw. 200°C justiert ist.

15. Beheizung nach einem der Ansprüche 12 bis 14, dadurch gekennzeichnet, daß mindestens einer Heizeinheit (2a) ein Temperaturbegrenzer (8c) zugeordnet ist und daß insbesondere der Temperaturbegrenzer (8c) innerhalb des Außenumfanges (12c) der Basis (3c) und/oder eines ringförmig an dieser angeordneten Widerstandes (5h) an der Basis (3h) befestigt ist.

16. Beheizung nach einem der Ansprüche 12 bis 15, dadurch gekennzeichnet, daß sie als Konvektor-Beheizung (1k) ausgebildet ist und der Träger (7k) ein beiderseits freiliegendes Strömungs-Leitblech bildet, daß insbesondere der Träger (7k) flach rinnenförmig abgewinkelt ist sowie Randzonen (36) zur Befestigung in einem Gehäuse aufweist, und daß vorzugsweise mehrere Heizeinheiten (2c) in zwei im Abstand nebeneinander liegenden Reihen an der Rinnen-Innenseite des Trägers (7k) befestigt sind.

17. Beheizung nach einem der Ansprüche 12 bis 16, dadurch gekennzeichnet, daß sie als Warmhalteplatten-Beheizung (1m) ausgebildet ist und der Träger (7m) eine in einer Richtung über seine Erstreckung im wesentlichen ununterbrochene Anlagefläche (9m) für die Unterseite einer Warmhalteplatte (39) bildet, daß insbesondere der Träger (7m) mit Versteifungs-Profilierungen (46m), wie Längssicken, versehen ist, und daß vorzugsweise zwischen etwa parallelen Profilierungen (46m) in einer einzigen Reihe hintereinanderliegend Heizeinheiten (2d) angeordnet sind.

18. Beheizung nach einem der Ansprüche 12 bis 17, dadurch gekennzeichnet, daß sie als Gebläse-Beheizung (1n) ausgebildet ist und der Träger (7n) eine wenigstens teilweise beiderseits freiliegende Zwischenplatte (45n) eines Gebläse-Strömungskanales (43) bildet, daß insbesondere der Träger (7n) abgewinkelte Befestigungsschenkel (46n) zur Befestigung in einem Gebläsegehäuse und/oder ein abgewinkeltes Strömungs-Leitglied (47n) bildet, und daß vorzugsweise Heizeinheiten (2h) quer zur Strömungsrichtung nebeneinander zwischen den Befestigungsschenkeln (46n) angeordnet sind.

## Claims

1. A heating including a heating unit (2) comprising a base (3) and at least one heating resistor (5, 6) of a resistor array (4) directly thermally coupled to the base (3) in at least one heated base zone (20), as well as at least one base portion (21) thermally coupled indirectly by heat conduction of a heat flux (31) along a first heat conduction path (29) of the base (3) to the corresponding heating resistor (5, 6), means (7) being provided with which the base portion (21) in each case is heated via a second heat conduction path (28) by an additional heat flow (30), characterized in that said second heat conduction path (28) as compared to said first heat conduction path (29) is longer, and that said base portion (21) in each case is heated via said second heat conduction path (28) at least as quickly as by heat conduction along said first heat conduction path (29) of said base (3).

2. The heating as set forth in claim 1, characterized in that said heat conduction means (7) comprises between the thermal centers of said base zone (20) and said base portion (21) a lower resistance to heat conduction than that of said base (3), more particularly the thermal conductivity of said heat conduction means being between at least three to seven times higher than the thermal conductivity of said base (3) and preferably said heat conduction means being thermally coupled over the full surface area evenly in the region of said base zone (20) or base portion (21) to said base (3).

3. The heating as set forth in claim 1 or 2, characterized in that said base (3) is connected to said heat conduction means (7) by a heat conducting contact (10) such as a bond, weld, surface pressure contact or the like, more particularly said contact (10) having a thickness of less than 1 mm, 1/10 mm or 1/100 mm and preferably said contact (10) being heat-resistant to more than 100°C or 150°C and exhibiting the properties of a silicone elastomer.

4. The heating as set forth in any of the preceding claims, characterized in that said heat conduction means (7) comprise a radiator surface (9) for direct heat transfer to the medium to be heated, more particularly said heat conduction means (7) having a larger surface area than that of said base (3) or of said contact (10) roughly parallel thereto, and preferably said heat conduction means (7) forming a heat sink for the portion heated by said heating unit (2) as well as protruding in at least two directions at right angles to each other beyond an outer edge (12) of said base (3).

5. The heating as set forth in any of the preceding claims, characterized in that said heat conduction means (7) have the shape of a plate at least as thick as the plate forming said base (3), more particularly said heat conduction means (7) being thermally elongated at least twice as much as said base (3) or many times less than said contact (10), and preferably said heat conduction means (7) comprising a thermal conductivity many times higher than that of an interlayer (11) between said base (3) and said heat conduction means (7).

6. The heating as set forth in any of the preceding claims, characterized in that said heating unit (2), relative to the surface area extent of said base (3) comprises a power density of at least 5 or 10 to a maximum of 20 or 30 W/cm² or relative to the surface area extent of said base zone (20) at least 20 to 200 W/cm², more particularly said base portion (21) being at least 3 times and maximally 20 times larger than said base zone (20) and preferably the nominal heating capacity of said heating unit (2) being rated to be at least 100 to 1000 W.

7. The heating as set forth in any of the preceding claims, characterized in that said base (3) comprises an outer width of at least 9 to 25 mm and maximally 150 to 200 mm, more particularly said base (3) comprising a thickness of at least 0.4 and maximally 8 mm and preferably said base (3) or said base zone (20) being configured or thermally stressed substantially centrally symmetrical, such as square.

8. The heating as set forth in any of the preceding claims, characterized in that said heating resistor (5, 6) includes a film resistor laminated to at least one surface (13, 14) of said base (3) in a film thickness of less than 1/10th mm, more particularly said heating resistor (5) being formed by sections (16, 17) connected in series as well as via short low-resistance conductor sections (18), and preferably at least one heating resistor (5) in the shape of a substantially closed ring being connected to electric terminals (24 to 26) in forming two parallel resistors (15) rated roughly the same.

9. The heating as set forth in any of the preceding claims, characterized in that an elongated heating resistor (5) is provided with a spacing corresponding roughly to its width along an outer edge (12) of said base (3) or an elongated heating resistor (6c) is provided with a spacing corresponding to at least a fifth of the corresponding outer width of said base (3c) from said outer circumference 12c of said base (3c) located nearest and roughly parallel thereto, more particularly at least two heating resistors (5c, 6c) being provided at least partly parallel to each other and nested annularly, and preferably said inner heating resistor (6c) having relative to said base (3c) a lower specific surface area rating than said outer heating resistor (5c).

10. The heating as set forth in any of the preceding claims, characterized in that said base portion (21) is provided to mount said connecting and/or control means (24, 25 or 8), more particularly at least one part of said resistor array (4) of said heating unit (2) being safeguarded by a protective device (8), such as a temperature sensor thermally controlled via said heat conduction means (7), and preferably said heating unit (2) being adjusted so that it is destroyed by the heating power, resulting in an open-circuit when in operation uncoupled from said heat conduction means (7).

11. The heating as set forth in any of the preceding claims, characterized in that said base (3) is formed by a plate and consists at least in part of an electrically insulating material, such as ceramics or AL₂O₃, more particularly said heating resistor (5. 6) being provided at the side of said plate (13 or 14a) facing away from said heat conduction means (7) and/or facing said heat conduction means (7a) and preferably said base (3b) being thermally coupled to said heat conduction means (7b) via a particulate layer (33) of a material, such as copper, which is a substantially better heat conductor than said base (3b).

12. The heating as set forth in any of the preceding claims, characterized in that said resistor array (4c) forms with said base (3c) a preassembled heating unit (2c) and more particularly said base (3c) being secured heat conductively to a substrate (7f) such that a heating zone of said substrate (7f) substantially larger than that of said heating unit (2c) is heated substantially evenly, said substrate (7f) forming preferably said heat conducting means.

13. The heating as set forth in claim 12, characterized in that several heating units (2e) are arranged spaced away from each other on said substrate (7k), more particularly at least one heating unit (2h) comprising a plate-shaped base (3h) of an insulating material having a surface area (14h) for securing said heat-conducting substrate (7h) and preferably at least two heating units (2d) being secured to said substrate (7m) distributed at an intermediate spacing corresponding at least to its outer width or in a regular checkerboard pattern.

14. The heating as set forth in claim 12 or 13, characterized in that for said substrate (7f) a power density of at least 0.1 to maximally 4 W/cm² is provided, more particularly substantially all heating units (2c) provided on said substrate (7k) being rated the same from a minimum of 50 to a maximum of 350 W and preferably said heating unit (2c) being adjusted to an operating temperature of maximally 250°C or 200°C.

15. The heating as set forth in claim 12 to 14, characterized in that at least one heating unit (2a) is assigned a temperature limiter (8c) and more particularly said temperature limiter (8c) being secured to said base (3h) within the outer circumference (12c) of said base (3c) and/or of a resistor (5h) arranged annularly thereon.

16. The heating as set forth in claim 12 to 15, characterized by it being configured as a convector heater (1k) and said substrate (7k) forming a baffle exposed on both sides, more particularly said substrate (7k) being downswept trough-shaped and comprising edge zones (36) for securing in a housing and preferably several heating units (2c) being secured in two rows located spaced away from each other in parallel at the troughed inner side of said substrate (7k).

17. The heating as set forth in claim 12 to 16, characterized by it being configured as a hot plate heater (1m) and by said substrate (7m) forming a radiator surface (9m) extending substantially full-length in one direction for the underside of a hot plate (39), more particularly said substrate (7m) being provided with stiffening beads (46m), such as longitudinal beads and preferably heating units (2d) being arranged between profiles (46m) roughly in parallel in a single row in series.

18. The heating as set forth in claim 12 to 17, characterized by it being configured as a blower heater (1n) and by said substrate (7n) forming an intermediate plate (45n) of a blower duct (43) exposed on both sides at least in part, more particularly said substrate (7n) forming downswept fastening legs (46n) for securing in a blower housing and/or a downswept baffle (47n) and preferably said heating units (2h) being arranged transversely to the direction of flow in parallel between said fastening legs (46n).

## Revendications

1. Chauffage avec une unité de chauffage (2), qui présente une base (3) et au moins une résistance chauffante (5, 6), thermiquement directement couplée à celle-ci au moins dans un domaine de base (20) chauffé, d'une disposition de résistances (4) ainsi qu'au moins un domaine de base (21), lequel est thermiquement couplé avec la respective résistance chauffante (5, 6) indirectement par conduction de chaleur d'un flux calorifique (31) le long d'un premier chemin de conduction de chaleur (29) de la base (3), des moyens (7) étant prévus avec lesquels le respectif domaine de base (21) est chauffé au moyen d'un deuxième chemin de conduction de chaleur (28) par un flux calorifique (30) additionnel, caractérisé en ce que le deuxième chemin de conduction de chaleur (28) est plus long par rapport au premier chemin de conduction de chaleur (29) et en ce que le domaine de base (21) respectif est chauffé par le deuxième chemin de conduction de chaleur (28) au moins si rapidement que par conduction de chaleur le long du premier chemin de conduction de chaleur (29) de la base (3).

2. Chauffage d'après la revendication 1, caractérisé en ce que les moyens de conduction de chaleur (7) présentent entre les centres thermiques du domaine de base (20) et du domaine de base (21) une inertie thermique inférieure par rapport à la base (3), en ce que notamment la thermoconductivité des moyens de conduction thermique est plus haute au moins de trois à sept fois que la thermoconductivité de la base (3), et en ce que de préférence les moyens de conduction de chaleur sont thermiquement couplés dans le domaine de la zone de base (20) ou encore dans le domaine de base (21) uniformement sur toute la surface avec la base (3).

3. Chauffage d'après la revendication 1 ou 2, caractérisé en ce que la base (3) est raccordée aux moyens de conduction de chaleur (7) au moyen d'une jonction de raccordement ou encore d'adhérence (10) thermoconductrice, tel qu'un collage, un soudage, un pressage des surfaces ou similaire, en ce que notamment la jonction de raccordement (10) présente une épaisseur au-dessous de 1 mm, 1/10 mm ou encore 1/100 mm, et en ce que de préférence la jonction de raccordement (10) est résistante à la chaleur au-dessus de 100° ou encore de 150° et qu'elle présente des propriétés d'un élastomère de silicone.

4. Chauffage d'après une des revendications précédentes, caractérisé en ce que les moyens de conduction de chaleur (7) présentent une surface de transmission de chaleur (9) pour la transmission de chaleur directe au matériau à chauffer, en ce que notamment les moyens de conduction de chaleur (7) sont de surface plus grande que l'étendue de surface à peu près parallèle à ceci de la base (3) ou encore de la jonction de raccordement (10), et en ce que de préférence les moyens de conduction de chaleur (7) forment des moyens de réfrigération pour le domaine chauffé par l'unité de chauffage (2) ainsi qu'ils saillent au-delà d'une arête circonférencielle (12) extérieure de la base (3) dans au moins deux directions orthogonales l'une par rapport à l'autre.

5. Chauffage d'après une des revendications précédentes, caractérisé en ce que les moyens de conduction de chaleur (7) sont en forme de plaque avec un'épaisseur de plaque au moins à peu près de l'ordre de l'épaisseur de la base (3), en ce que notamment les moyens de conduction de chaleur (7) présentent une expansion thermique linéique au moins deux fois plus grande par rapport à la base (3) ou encore de plusieurs fois plus petite par rapport à la jonction de raccordement (10), et en ce que de préférence les moyens de conduction de chaleur (7) présentent une thermoconductivité de plusieurs fois plus grande par rapport à une couche intermédiaire (11) entre la base (3) et les moyens de conduction de chaleur (7).

6. Chauffage d'après une des revendications précédentes, caractérisé en ce que l'unité de chauffage (2) présente une puissance volumique au moins de 5 ou encore de 10 jusqu'à 20 au plus ou encore de 30 watt/cm² par rapport à l'étendue de surface de la base (3) ou encore au moins de 20 à 200 watt/cm² par rapport à l'étendue de surface du domaine de base (20), en ce que notamment le domaine de base (21 ) est plus grand au moins de 3 fois et au plus de 20 fois par rapport au domaine de base (20), et en ce que de préférence la puissance de chauffage nominale de l'unité de chauffage (2) s'élève au moins à 100 jusqu'à 1000 watt.

7. Chauffage d'après une des revendications précédentes, caractérisé en ce que la base (3) présente une ampleur extérieure au moins de 9 à 25 mm et au plus de 150 à 200 mm, en ce que notamment la base (3) présente une épaisseur au moins de 0,4 et au plus de 8 mm, et en ce que de préférence la base (3) ou encore le domaine de base (20) est réalisé ou encore thermiquement chargé essentiellement à symétrie ponctuelle, tel que de forme carrée.

8. Chauffage d'après une des revendications précédentes, caractérisé en ce que la résistance chauffante (5, 6) comprend une résistance à couche stratifiée au moins sur une surface (13, 14) de la base (3) d'une épaisseur de moins de 1/10 mm, en ce que notamment la résistance chauffante (5) est constituée par des sections de résistance (16, 17) qui s'ensuivent montées en série ainsi que connectées par des sections de conducteur (18) courtes de basse résistance, et en ce que de préférence au moins une résistance chauffante (5) essentiellement fermée en anneau en constituant deux résistances parallèles (15) à peu près de la même puissance est connectée avec des connexions (de 24 à 26) électriques.

9. Chauffage d'après une des revendications précédentes, caractérisé en ce qu'une résistance chauffante (5) allongée est prévue avec un écart correspondant à peu près à sa largeur le long d'une arête extérieure (12) de la base (3) ou encore qu'une résistance chauffante (6c) avec un écart correspondant au moins à un cinquième de l'étendue extérieure correspondante de la base (3c) de l'arête extérieure (12c) à peu près parallèle par rapport à elle et la plus proche, en ce que notamment au moins deux résistances chauffantes (5c, 6c) sont prévues au moins en partie à peu près parallèlement l'une à l'autre ou encore se trouvant l'une dans l'autre en forme d'anneau, et en ce que de préférence la résistance chauffante (6c) intérieure présente par rapport à la base (3c) une puissance par unité de surface inférieure à celle de la résistance chauffante (5c) extérieure.

10. Chauffage d'après une des revendications précédentes, caractérisé en ce que le domaine de base (21) est prévu pour le logement de moyens de branchement et/ou de commande (24, 25 ou encore 8), en ce que notamment au moins une partie de la disposition de résistances (4) de l'unité de chauffage (2) est assurée par un moyen de protection (8), tel qu'un contrôleur de température commandé thermiquement par des moyens de conduction de chaleur (7), et en ce que de préférence l'unité de chauffage (2) est ajustée de manière, que pendant le service découplé des moyens de conduction de chaleur (7) elle est détruite par la puissance de chauffage à l'aide d'une interruption du circuit électrique.

11. Chauffage d'après une des revendications précédentes, caractérisé en ce que la base (3) est constituée par une plaque et qu'elle est composée au moins en partie d'un matériau électriquement isolant, tel que de la céramique ou encore de Al₂O₃, en ce que notamment la résistance chauffante (5, 6) est prévue sur la face de plaque (13 ou encore 14a) opposée aux moyens de conduction thermique (7) et/ou orientée vers les moyens de conduction thermique (7a), et en ce que de préférence la base (3b) est thermiquement couplée aux moyens de conduction de chaleur (7b) au moyen d'une couche à grain (33), de matériau considérablement plus thermoconductif par rapport à la base (3b), tel que du cuivre.

12. Chauffage d'après une des revendications précédentes, caractérisé en ce que la disposition de résistances (4c) constitue avec la base (3c) une unité de chauffage (2c) prémontée et que notamment la base (3c) est fixée, en étant raccordée par conduction de chaleur sur un support (7f) de telle manière, qu'elle chauffe un champ de chauffage du support (7f) cosidérablement plus grand par rapport à l'unité de chauffage (2c), de manière essentiellement uniforme, le support (7f) formant de préférence les moyens de conduction de chaleur.

13. Chauffage d'après la revendication 12, caractérisé en ce que plusieurs unités de chauffage (2e) sont disposées avec un écart entr'elles sur le support (7k), en ce que notamment au moins une unité de chauffage (2h) présente une base (3h) en forme de plaque en un matériau isolant, avec une surface de fixation (14h) pour le support (7h) thermoconductif, et en ce que de préférence au moins deux unités de chauffage (2d) sont fixées avec un écart intermédiaire correspondant au moins à leur ampleur extérieure ou encore distribuées uniformément à la manière d'une trame sur un support (7m).

14. Chauffage d'après la revendication 12 ou 13, caractérisé en ce que pour le support (7f) est prévue une puissance volumique s'élèvant au moins de 0,1 jusqu'à 4 watt/cm² au plus, en ce que notamment en substance toutes les unités de chauffage (2c) prévues sur le support (7k) présentent les mêmes puissances nominales de 50 au moins jusqu'à 350 watt au plus, et en ce que de préférence l'unité de chauffage (2c) est ajustée pour une température de service de 250° au plus ou encore de 200°C.

15. Chauffage d'après une des revendications de 12 à 14, caractérisé en ce qu'à une unité de chauffage (2a) au moins est associée un limiteur de température (8c) et en ce que notamment le limiteur de température (8c) est fixé, à l'intérieur de la circonférence extérieure (12c) de la base (3c) et/ou d'une résistance (5h) disposée en forme d'anneau sur cette dernière, sur la base (3h).

16. Chauffage d'après une des revendications de 12 à 15, caractérisé en ce qu'il est réalisé en tant que chauffage à convection (1k) et que le support (7k) forme une tôle-guide d'écoulement dégagée sur les deux côtés, en ce que notamment le support (7k) est coudé de manière plate en forme de rigole ainsi qu'il présente des zones marginales (36) pour la fixation dans un boîtier, et en ce que de préférence plusieurs unités de chauffage (2c) sont fixées en deux rangées écartées l'une à côté de l'autre du côté intérieur de gorge du support (7k).

17. Chauffage d'après une des revendications de 12 à 16, caractérisé en ce qu'il est réalisé en tant que chauffage de plaque de maintien à température (1m) et que le support (7m) forme une surface d'apposition (9m), qui ne présente essentiellement pas d'interruptions sur son étendue, pour la face inférieure d'une plaque de maintien à température (39), en ce que notamment le support (7m) est muni de profilages de raidissement (46m), telles que des nervures longitudinales, et en ce que de préférence entre des profilages (46m) à peu près parallèles sont disposées des unités de chauffage (2d) dans une seule rangée l'une derrière l'autre.

18. Chauffage d'après une des revendications de 12 à 17, caractérisé en ce qu'il est réalisé en tant que chauffage de ventilateur (1n) et que le support (7n) forme une plaque intermédiaire (45n) dégagée au moins en partie des deux côtés, d'un conduit d'écoulement de ventilateur (43), en ce que notamment le support (7n) forme des ailes de fixation (46n) coudées pour la fixation dans un boîtier de ventilateur et/ou un élément de guidage d'écoulement (47n) coudé, et en ce que de préférence des unités de chauffage (2h) sont disposées transversalement par rapport à la direction d'écoulement l'une à côté de l'autre entre les ailes de fixation (46n).
